(19) Europäisches Patentamt / European Patent Office / Office européen des brevets

(11) **EP 3 272 648 A2**

(12) **EUROPEAN PATENT APPLICATION**
published in accordance with Art. 153(4) EPC

(43) Date of publication:
**24.01.2018 Bulletin 2018/04**

(51) Int Cl.:
*B64C 11/02* (2006.01)     *B63H 1/20* (2006.01)
*B60F 5/02* (2006.01)     *B64C 29/00* (2006.01)

(21) Application number: **16769146.8**

(22) Date of filing: **18.03.2016**

(86) International application number:
**PCT/KZ2016/000005**

(87) International publication number:
**WO 2016/153328 (29.09.2016 Gazette 2016/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.03.2015 KZ 20150414**

(71) Applicant: **Sapargaliyev, Aldan Asanovich
Almaty 050058 (KZ)**

(72) Inventor: **Sapargaliyev, Aldan Asanovich
Almaty 050058 (KZ)**

(74) Representative: **ip21 Ltd
Central Formalities Department
Lakeside 300
Old Chapel Way
Broadland Business Park
Norwich
Norfolk NR7 0WG (GB)**

(54) **SELF-MOVING APPARATUS AND COMPONENTS THEREOF**

(57) The present invention relates to SMAs (self-moving apparatuses) which use any type of propulsion means, including, without limitation, an FPGB (propeller-gear block) comprising an FP (propeller) and a drive for supplying power thereto. More particularly, the present invention describes: novel forms of energy-efficient (economical) FPGBs; and novel conceptual designs for SMAs, which make it possible to create economical SMAs with high specific power. The invention can be used for creating novel energy-efficient types of SMAs, and for the widespread (mass) use of compact and environmentally-friendly electric engines instead of environmentally detrimental and bulky internal combustion engines.

FIG. 1

EP 3 272 648 A2

**Description**

The present invention relates to SMA (self-moving apparatus SMA) using any kind of motor, including FPGB propulsors (FPGB - propeller-gear block), comprising an FP propeller (FP - propeller) and an motor drive. In particular, the present invention describes:

- new types of energy efficient and economical FPGB;
- new SMA conceptual designs for economical and high specific power SMA.

The invention can be used to create new energy-efficient types of SMA and for large-scale (mass) use of environmentally friendly and compact propulsors on SMA, in particular, electric motors, instead of environmentally harmful and bulky internal combustion engines (ICE).

All terms used in the present invention are mainly explained in further materials of the application. Some of the terms given in the materials of this application for an invention, for their unambiguous interpretation, require a separate additional explanation, which are given here.

1. General concepts.

The term SMA means any device capable of self-moving, for example, any kind of overwater and underwater self-moving vehicles, cars, aerosleighs, gliders, hovercrafts, aircrafts.

To determine the spatial orientation of any object under consideration, we will determine its: $\lambda$-plane, which is parallel to the plane of the base of the object; h-plane, which is perpendicular to the $\lambda$-plane; longitudinal h-plane, which is parallel to the section plane along the maximum perimeter of the object and is perpendicular to the $\lambda$-plane; a transverse h-plane that is perpendicular to the $\lambda$-plane and to the longitudinal h-plane.

2. Flying apparatus.

Flying apparatus are very diverse and, for their consideration, in the further materials of the invention, we will adhere to the classification given in Wikipedia for self-movement apparatuses.

Classification of aircraft Table 1

| [screenshot on the date, photo] Flying apparatus | |
| --- | --- |
| Planer | Planer (Motor-glider); Hang-glider (Deltallot); Hard-winged; Paragliding (Parachute, Motoparaplane) |
| Rotorcraft | Autogyro; Helicopter (aircoopter); Helicopter jet pack (Jetpack); |
| | Rotorwing; Conversion vehicle; Multicopter |
| Aerostat | Aerostat (Charler, Montgolfier, rozier, stratostat); Airship |
| Aerodynamic | Aircraft; Seaplane; Flying submarine; The Ekranoplan (the Flarecraft) |
| Rocketodynamic | Rocketplan; Jet pack (Martin Jetpack, Gryphon); Cruise missile |
| Others | Ornithopter; Cyclocopter |

3. General classification of FPGB (FPGB - propeller-gear block containing FP propeller)

Such classification is for the first time.

The FP propeller (FP propeller, also called a screw) is a blade propulsor interacting with the current medium and it is used as: FP motor - to convert power (any kind, including muscular power) supplied by the drive for SMA movement, for example, the known aerosleighs, gliders, hovercrafts, aircraft; FP-mixer - to convert the power supplied by the drive to create a jet in the current environment (for example, used as FP fans).

The average line of the boundary between the moving and fixed parts of the FPGB, along which the motion occurs, will be called the contour of the CHM characteristic line of motion (CHM - the contour of the characteristic line of motion including rotation). Assuming that the CHM lies in the $\lambda$-plane of the FPGB, for the rotational FP (FP rotational motion), the $\lambda$-plane FPGB is the plane of rotation of FP, which is given as the main one. The $\lambda$-plane of FPGB is the plane perpendicular to its $\lambda$-plane. In the case where the CHM is a straight line (reciprocal FP of rectilinear motion), the difference between the $\lambda$-plane and the $h$-plane of such FPGB is that the h-plane of such FPGB is the plane that contains the drive plane of the FPGB propulsor.

The inner side of FPGB and FP will be the side of the concavity of the CHM or the side of location of the drive of this FPGB. The opposite side to the inside of FPGB and FP will be called the outside of FPGB and FP.

The ICL (Induction coupling loop), where ICZ (Induction coupling zone) is located, is to be differentiated into: the central ICL, concentrated on a small area, occupies the central area of the FP; dispersed ICL, which is located in a linear or annular region, selected from a number of shapes: round, ellipsoidal, polygonal with rounded corners or other shapes.

Rotational FPGB and FP will be distinguished by: solid, which on the inner side has a "passive central region" of small size, in comparison with the size of the blade, which is usually closed with the central integral part, or the central ICL; circular, which on the inside has a "passive central region" of considerable size comparable to the size of the blade, which is selected from a series of shapes: round, ellipsoidal, polygonal with rounded corners or other shapes.

FPGB and FP will be called collinear, non-collinear and orthogonal in accordance with the value of the angle $\alpha_B$ between the surface containing the blades and the plane containing the tangent to CHM: collinear, at $\alpha_B = 0$; Non-collinear, for $0 < \alpha_B < \pi / 2$; Orthogonal, at $\alpha_B = \pi / 2$.

We give a classification of FPGB and FP and their corresponding notation.

3.1 A variety of FP in FPGB is represented in the form selected from the series (RR, CR, BF, De) FP: RR FP - round-rotational FP; CR FP - curvilinear-rotational; BF FP - reciprocating (rectilinear or curvilinear motion of a reciprocating kind); De FP - differentiated. In this case, any of the De FP is performed inseparably differentiated or discontinuous-differentiated.

3.2 FPGB, any of its (RR, CR, De) FP is represented the selected from the series (RR, CR, De) (s, r) FP: (RR, CR, De) s FP - solid; (RR, CR, De) r FP - ring.

With this, (RR, De) s FP can be performed with a central or dispersed ICL.

3.3 FPGB, any of its (RR, De) s FP with the central ICL is made with outer-directed blades - (RR, De) s ↑ FP, and is selected from the series (RR, De) s (C, $\in$,) ↑ FP : (RR, De) sC ↑ FP - collinear; (RR, De) s$\in$ ↑ FP - noncollinear.

3.4 FPGB, any of its (RR, CR, De) r FP is executed selected from the series (RR, CR, De) r (C, $\in$, O) FP: (RR, CR, De) rC FP - collinear; (RR, CR, De) r$\in$ FP - non-collinear; (RR, CR, De) rO FP - orthogonal.

3.5 FPGB, any of its (RR, CR, De) rO FP is made with one-shoulder or two-shoulder blades.

3.6 FPGB, any of its (RR, De) s (C, $\in$) FP with dispersed ICL and (RR, CR, De) r (C, $\in$) FP are respectively chosen from the series (RR, De) s (C, $\in$) İ FP with the dispersed ICL and (RR, CR, De) r (C, $\in$) İ FP, where İ = ↑, ↓, ↕: (RR, De) s (C, $\in$) ↑ FP with the dispersed ICL and (RR, CR, De) r (C, $\in$) ↑ FP - with outer-directed blades; RRs (C, $\in$) ↓ FP with dispersed ICL and (RR, CR, De) r (C, $\in$) ↓ FP - with inner-directed blades; (RR, De) s (C, $\in$) ↕ FP with dispersed ICL and (RR, CR, De) r (C, $\in$) ↕ FP - with bi-directional blades.

3.7 FPGB, any of its (RR, De) s (C, $\in$) ↕ FP with dispersed ICL and (RR, CR, De) (C, $\in$) ↕ FP are fulfilled, respectively in the form of (RR, De) s (C , $\in$) ↕ FP-OT with dispersed ICL and (RR, CR, De) r (C, $\in$) ↕ FP-OT - with optimized torques (with minimum torque).

3.8 The FPGB, any of its De FP can be represented as the set $\{ \prod_{k=1}^{N} [(RR,\ CR,\ BF)]^{|k} \}(s,\ r)$ FP. In this case, each cascade member under $\prod_{k=1}^{N}$ falls into a number of species, in accordance with the varieties of FPs described in the previous paragraphs 3.1-3.7.

In general, De FP can be executed: with a constant configuration or with a variable configuration (the components change their orientation relative to each other); nondegenerate (the first cascade consists of one constituent / member) or degenerate (the first cascade consists of two or more constituent / members).

We remark that De FP will be called collinear if all its components are collinear (located in the same plane); noncollinear if at least one of its components is noncollinear; with outer-directed blades if all its components are made with outer-directed blades; with inner-directed blades if all its components are made with inner-directed blades; with bi-directional blades if all its components are made with bi-directional blades; with optimized torque bi-directional blades if all of its components are made with optimized torque bi-directional blades; with a central ICL if its first cascade is made with a central ICL; with a dispersed ICL if its first cascade is performed with a distributed ICL.

Among the possible FP varieties that are mentioned above and disclosed in the present invention are currently known:

- RRsC $\uparrow$ FP (rotational), which is widely used as a propulsor (US 3774865), mixer (US 3774865); RRrS $\uparrow$ FP, propeller of an aircraft (US 20130306802 A);

- made in the form of an aircraft propulsor: RRr$\complement$ $\uparrow$ FP (US 6837457 B2); A cycloidal rotor of the form RRrO FP (US 872726 B2,); DRRc (C, $\complement$) FP (US 8408488 B2).

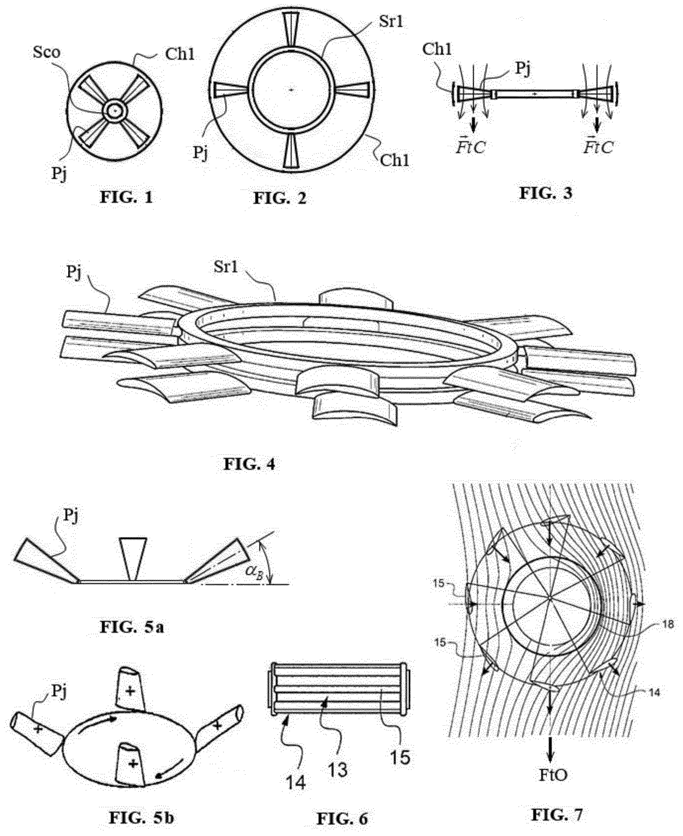

In Fig. 1 in the projection onto the $\lambda$-plane FPGB (in the projection on the plane of rotation) shows RRs (C, $\complement$)$\uparrow$FP with the central ICL, where: Sco is the central ICL; Pj - FP blades; Ch1 - external channel FP. And j = 1, 2,3,4, - number of blades, i.e. in this case the FP with four blades is shown.

In Fig. 2 in the projection onto the $\lambda$-plane FPGB is shown the RRr (C, $\complement$)$\uparrow$FP with ring ICL. In Fig. 3 in the projection on the h-plane (in the projection onto the plane perpendicular to the $\lambda$-plane) RRrC$\uparrow$FP is shown, made in the form of an aircraft propulsor (US 20130306802 A), with RRrC$\uparrow$FP, as well as any of the collinear FPs, creating perpendicular to the $\lambda$-plane FPGB and FP averaged pulling force $\overset{\prime}{F}tC$. In Fig. 3 continuous thin lines with arrows show the lines of motion of the jets of the current medium.

In fact, US 20130306802A offers a double coaxial RRrS$\uparrow$FP, the three-dimensional image of which is shown in Fig. 4.

In Fig. 5a and 5b, respectively, in the projection on the $\hbar$-plane FPGB and in the volumetric form, are shown RRr$\complement$ $\uparrow$ FP, made in the form of an motor (propulsor) of the aircraft (US 6837457 B2).

In this case, the angle $\alpha_B$ between the $\lambda$-plane FPGB and the blade Pj is limited to 0$p$ $\alpha_B p$ $\pi/2$. RRr$\complement$ $\uparrow$ FP, as well as any of the noncollinear FPs, creates an averaged pulling force $\overset{\prime}{F}t\complement$. $\overset{\prime}{F}t\complement$ is formed as a result of the addition of traction forces that are circularly directed at an angle $\alpha_B$ to the FPGB plane, in accordance with the inclination of the Pj blade to the FPGB plane.

RRrO FP, made in the form of a propulsor (cycloid rotor) of an aircraft (US 872726 B2), are schematically shown in Fig. 6 and 7. In this case, the angle $\alpha_B$ (not shown) between the $\lambda$-plane FPGB and the blade Pj is equal to $\pi/2$. As shown in Fig. 7, RRrO FP, as well as any of the orthogonal FPs, creates an average tractive force $\overset{\prime}{F}tO$ parallel to the $\lambda$-plane FPGB. In this regard, Fig. 7. Continuous thin lines show the flows of the current medium.

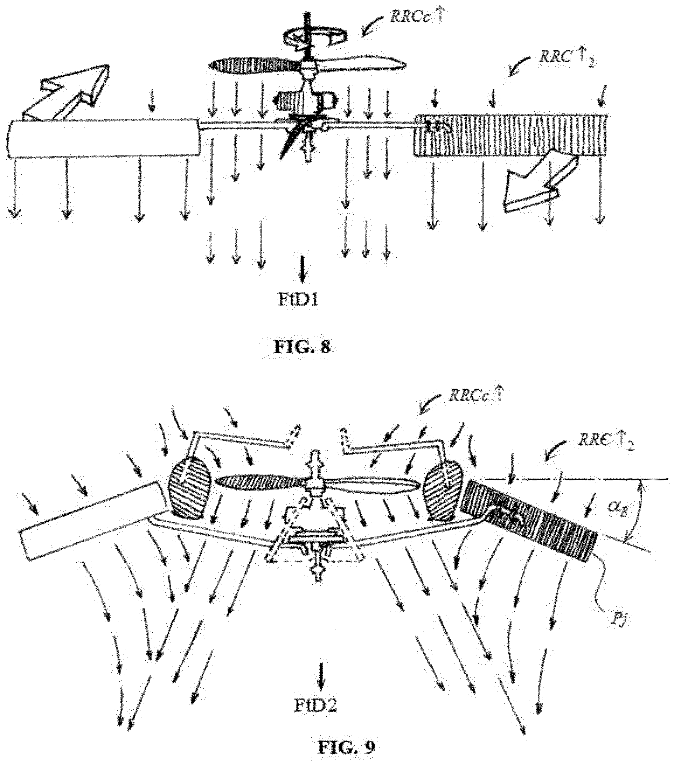

In Fig. 8 and 9 in the projection in the $\hbar$-plane of FPGB and FP are shown De FP made in the form of two double-stage FPs (US 8408488 B2) from the set: {RRr(C, $\complement$)$\uparrow^{l2}$ (RRsC$\uparrow^{l1}$)}: {RRrC$\uparrow^{l2}$(RRsC$\uparrow^{l1}$)} FP, performed with the internal component RRsC$\uparrow^{l1}$ and the external component RRrC$\uparrow^{l2}$ (Fig. 8); {RRr$\complement$$\uparrow^{l2}$ (RRsC$\uparrow^{l1}$)} FP, executed with the internal component of RRsC$\uparrow^{l1}$ and the external component RRr$\complement$$\uparrow^{l2}$ (Fig. 9). The blades Pj of the outer component RRr$\complement$$\uparrow^{l2}$ are made at an angle $\alpha_B \neq 0$, with respect to the $\lambda$-plane FP. At the same time, {RRrC$\uparrow^{l2}$(RRsC$\uparrow^{l1}$)} FP is executed stepwise-differentiated - ((RRsC$\uparrow^{l1}$) is located higher than RRrC$\uparrow^{l2}$ and there is an air gap between them), and {RRr$\complement$$\uparrow^{l2}$ (RRsC$\uparrow^{l1}$)} FP is performed inseparably differentiated - (RRsC$\uparrow^{l1}$) is located at the base level RRrC$\uparrow^{l2}$ and there is no air gap between them. As shown in Fig. 8 and 9, {RRrC$\uparrow^{l2}$ (RRsC$\uparrow^{l1}$)} FP and {RRr$\complement$$\uparrow^{l2}$(RRsC$\uparrow^{l1}$ )} FP create the average traction forces (collinear) perpendicular to the $\lambda$-plane FP: $\overset{\prime}{F}tD1$ and $\overset{\prime}{F}tD2$. The continuous thin

lines with arrows show the lines of the jets of the current medium.

The disadvantages of the known RRs (C, $\mathcal{C}$) ↑ FP with the central ICL is its low energy efficiency - it consumes a lot of energy while doing relatively small useful work, especially with the large size of the FP blades, since for RRs (C, $\mathcal{C}$)↑FP the power to create torque increases direct-proportionally with the increase in the length of its blades.

The main disadvantage of the known implementation of RRr (C, $\mathcal{C}$)↑FP on an aircraft (US 20130306802 A) is that RRr (C, $\mathcal{C}$)↑FP is directly connected to the aircraft hull. This leads to the appearance inside the hull of a significant noise level from the operating RRr (C, $\mathcal{C}$)↑FP.

In modern helicopters, one of the main technical problems is the torque of a single FP, transmitted to a helicopter. To compensate for the torque of the rotor, two technical solutions are used - a tail beam of considerable length is specially created with the steering FP at its end, or a double coaxial FP of the opposite rotation is used. Both these technical solutions have drawbacks.

The tail beam and the steering FP is an extra material cost, increases the dimensions of the helicopter, its mass, which the helicopter must always carry with it. In addition, the steering FP consumes about 10% of the total energy used by the helicopter.

The double coaxial FP of the opposite rotation is an energy-intensive system and has a low energy efficiency - the total lifting thrust created in this case is significantly less than the total lifting thrust produced by each of the two FPs when they are separated from each other.

It is known that an exhaust gas jet from a horizontal thrust motor (for example, the serial Boeing-737-800 airliner) comes from under the wing of the aircraft. In this case, such a pressurized, dense mass of gas creates an elevating (vertical) thrust to the aircraft due to the difference in gas pressure under and above its wings. The disadvantage of such a technical solution is that the low pressure area of the exhaust jet created by the horizontal thrust motor at its inlet is not used to create an additional lifting effect of the aircraft.

There are known projects (https://www.nasa.gov/topics/aeronautics/features/future_airplanes.html), which provide for the creation of additional lift (vertical) thrust to the aircraft due to the low pressure of the exhaust jet over the airplane created by the horizontal thrust motor. The disadvantage of such a technical solution is that the high-pressure region of the ejected jet created by the horizontal thrust motor at its outlet is not used to create an additional lift effect of the aircraft.

In modern vehicles mainly used internal combustion engines (ICE), which are environmentally harmful, heavy, bulky. One of the most important strategic goals of mankind today is the transfer of land and air vehicles to electric motors that are environmentally friendly, compact and light.

Vehicles with electric motors are known. For example, the Flying Car - AeroMobil 3.0 E-fan, (https://www.youtube.com/watch?v=0Yn2uyQJ1jc). But they are forced to take a large number of electric batteries. In this case, the E-fan can take on board only two people, and stay in the air without recharging for less than an hour. Such low energy efficiency of air vehicles with electric motors is associated with: low efficiency of electric motors, which is especially characteristic for electric motors of small and medium power; significant dimensions of electric motors; low energy efficiency FP; structural disadvantages of air vehicles.

The main objects of the present invention are:

- new types of energy-efficient FPGB;
- new SMA designs, which allow creating economical and with large specific useful power SMAs.

The purpose of the invention is to reduce the energy intensity and size of FPGB and SMA while improving the efficiency of their operation.

The claimed technical solutions comply with the criteria of the invention, since no similar solutions have been identified at the filing date of the application. The technical solutions proposed here have a number of significant differences from known analogues.

FPGB (FPGB - propeller gear block) containing a propeller FP (FP-propeller) and a drive to supply power to it, the FP, which is selected from the series (C, $\mathcal{C}$, O) FP, where C FP is collinear, $\mathcal{C}$ FP - non-collinear ; O FP - orthogonal kinds of FP.

The main difference between the proposed technical solutions of the new FPGB class is that it is made up of one of the FP types selected from the series:

(A) CR (C, $\mathcal{C}$) FP - curvilinear-rotational, selected from the series: CR (C, $\mathcal{C}$) ↑ FP - with outer-directed blades; CR (C, $\mathcal{C}$) ↓ FP - with inner-directed blades; CR (C, $\mathcal{C}$) ↕ FP) - with bi-directional blades;

(B) BF (C, $\mathcal{C}$) FP - reciprocating (rectilinear or curvilinear motion of reciprocating form) selected from the series:

BF (C, $\mathbb{C}$) ↑ FP - with outer-directed blades; BF (C, $\mathbb{C}$) ↓ FP - with inner-directed blades; BF (C, $\mathbb{C}$) ↕ FP) - with bi-directional blades.

(C) circular rotational RR (C, $\mathbb{C}$) FP made with inner-directed blades RR (C, $\mathbb{C}$) ↓ FP or with bi-directional blades RR (C, $\mathbb{C}$) ↕ FP);

(D) De FP is a differentiated one, chosen from the set $\{ \prod_{k=1}^{N} [(RR, CR, BF)]^{|_k} \}(c, r) P,$ performed nondegenerate (the first cascade consists of one member) or degenerate (the first cascade consists of two or more members).

Other differences between the proposed technical solutions of the new FPGB class are that:

- its (RR, CR, De) FP is made from the series (RR, CR, De) (s, r) FP: (RR, CR, De) s FP - solid; (RR, CR, De) r FP - ring;
- its (RR, De) s FP is made with a central or dispersed ICL (ICL - drive coupling zone);
- its (RR, De) s FP with the central ICL is made with outer-directed blades - (RR, De) s ↑ FP, and is selected from the series (RR, De) s (C, $\mathbb{C}$,) ↑ FP: (RR, De) sC ↑ FP - collinear; (RR, De) s$\mathbb{C}$ ↑ FP - noncollinear;
- its (RR, CR, De) r FP is executed selected from the series (RR, CR, De)r(C, $\mathbb{C}$, O) FP: (RR, CR, De) rC FP - collinear; (RR, CR, De) r$\mathbb{C}$ FP is non-collinear; (RR, CR, De) rO FP - orthogonal;
- its (RR, CR, De) rO FP is made by one-shoulder or two-shoulder blades;
- its (RR, De)s(C, $\mathbb{C}$) FP with dispersed ICL and (RR, CR, De)r(C, $\mathbb{C}$) FP are respectively chosen from the series (RR, De)s(C, $\mathbb{C}$) İ FP with dispersed ICL and (RR, CR, De) (C, $\mathbb{C}$) İ FP, where İ = ↑, ↓ ↕: (RR, De) s (C, $\mathbb{C}$) ↑ FP with dispersed ICL and (RR, CR, De) (C, $\mathbb{C}$) ↑ FP - with outer-directed blades; RRs (C, $\mathbb{C}$) ↓ FP with dispersed ICL and (RR, CR, De) (C, $\mathbb{C}$) ↓ FP - with inner-directed blades; (RR, De) s (C, $\mathbb{C}$) ↕ FP with dispersed ICL and (RR, CR, De) (C, $\mathbb{C}$) ↕ FP - with bi-directional blades;
- its RR, De) s (C, $\mathbb{C}$) ↕ FP with dispersed ICL and (RR, CR, De) (C, $\mathbb{C}$) ↕ FP are fulfilled, respectively, in the form of (RR, De) s (C, $\mathbb{C}$) ↕ FP-OT with dispersed ICL and (RR, CR, De) r (C, $\mathbb{C}$) ↕ FP-OT - with optimized torques (with minimum torque);
- the ratio of the lengths of the inner $r_{M1}$ to the outer $r_{M2}$ component (the ratio of the lengths of the inner-directed to

$$0,5 \le \frac{r_{M1}}{r_{M2}} \le 0,8$$

the outer-directed blades) is given in the interval
- its De FP is made with a constant configuration or with a variable configuration (the components change their orientation relative to each other);
- it is made cascaded and with the possibility of rotating the blades of its internal and external cascades: in one direction; in different directions; regulation of their directions independently of each other;
- it is made with the possibility of rotation of the blade parts of its internal and external cascades: with the same angular velocity; with different angular velocities; regulation of their angular velocities independently of each other;
- RR (C, $\mathbb{C}$) ↕ FP (RR (C, $\mathbb{C}$) ↕ FP - FP type with bi-directional blades) is selected from the series: it is executed with a single and equal number of outer- and inner-directed parts of the blades; is made with disconnected and different number of outer- and inner-directed parts of blades;
- its DCL (Drive coupling loop) is made of selected from the series: rigid of the given form, the common base of rotor block; central drive; at least one side drive; a flexible common base of the rotor assembly with one or more drive and a guide system selected from the series: a fixed rigid forming base of stator block to support the flexible common base of rotor block; angle-forming rollers to support the flexible common base of rotor block;
- its curvilinear-rotational - CR (C, $\mathbb{C}$) FP, is made with CHM (CHM - characteristic line of motion), selected from the series: triangular shape with rounded corners; two-angled shape with rounded corners - in a form in which the two sides are made in the form of straight lines, and two end sides are made in the form of half circles; quadrangular shape with rounded corners; ellipsoid form, but are not limited to them;
- it is executed with the compensated twisting moment;
- it is performed by the b/c RB technology and with at least three interfaced SSDBs (SSDB subsystems of drive blocks) - with the main (bRB) and compensating (cRB) rotor blocks (for example, two-rotor) and with the possibility of mutual compensation of their torque transmitted to the stator block;

- its bRB is performed bladed, cRB is made bladed or energy-producing;
- its cRB is designed to provide power generation on the basis of direct drive;
- its two rotor blocks are driven by a common stator block;

Its stator block and at least one rotor block is provided with a torque value sensor transmitted from the rotor block to the stator block;

- the blades of its rotary FP are designed to be able to rotate uniformly along the azimuth angle of the arc DCL or the X-shaped relative to each other during rotation and the parking positions are concentrated in two sectors, in particular two opposite sectors;
- its blades FP are connected to the base of rotor block through beams;
- its drive is made from an electric motor or a mechanical motor;
- it is made with the drive from mEM (mEM - multi-vector electric motor) with MVIC, where MVIC - multivector induction coupling;
- it is made with a direct drive from an electric motor;
- at least one of its SSDB (SSDB - subsystem of drive blocks) is performed sector;
- one of its SSDBs is executed full-interval ICS (ICS - the Induction coupling surface), the other with it the conjugated sector SSDB is executed with an arbitrary number of sector ICSs and each of the sector ICS occupies a non-zero arbitrary size;
- it is designed to ensure the constancy of the areas of surfaces located in a simultaneous mutual drive engagement, regardless of the position of rotor block with respect to the stator block;
- it is made with RR FP - circular rotational FP and with the possibility of uniformity of azimuth angular distributions of the width and area of sector ICS of rotor block;
- for a single-sector ICS of stator block located along an arc with an azimuth angle $\theta_{BA\pi} = \pi$ or with a three-sector

$$\theta_{BA\pi 3} = \frac{\pi}{3}$$

ICS of stator block located along an arc with an azimuth angle , each of the sectors, where three

$$\theta_{BA\pi 3} = \frac{\pi}{3}$$

sectors of stator block are located at intervals with an azimuth angle , with an even number of sector ICSs of rotor block, in the creation of a simultaneous mutual drive coupling involves half of all sector ICSs of rotor block;
- with an arbitrary number of sector ICSs of rotor block $N_{Pj}$, in the case of a two-sector ICS of stator block, each of

$$\theta_{BAj} = \frac{2\pi}{N_{Pj}}$$

which is located in an arc with an azimuth angle $\theta_{BAj}$ equal to and located on the opposite sides of the ICL, two sector ICSs of rotor block participate in creating the simultaneous mutual drive coupling;

- with an arbitrary $N_{Pj}$ number of sector ICSs of rotor block and with two sector ICS of stator block, each of which is

$$\theta_{BAj} = \frac{\pi}{N_{Pj}}$$

located along an arc with an azimuth angle of equal to , one sector ICS of rotor block participates in creating a simultaneous mutual drive coupling, and: with an odd number of sector ICSs of rotor block, the sector ICSs of stator block are located on the opposite sides of the ICL; with an even number of sector ICSs of rotor block, the sector ICSs of stator block are arranged such that on one side the azimuth angular interval between them is $\beta_{Uo2} = \pi$;
- with an even $N_{Pj}$ number of sector ICS of rotor block with three-sector ICS of stator block, each of which is designed

$$\theta_{BAj3} = \frac{2\pi}{3N_{Pj}}$$

as an arc with an azimuth angle , and under the conditions that the two sector ICSs of stator block

$$\theta_{BAj3} = \frac{2\pi}{3N_{Pj}}$$

are located at azimuth angular distance equal to ___ and the third sector ICS of stator block is located on the opposite side, in the creation of a simultaneous mutual drive coupling, one sector ICS of rotor block participates.

SMA (SMA - self-moving apparatus), which includes the traction system of the means of movement and the hull.

The main difference between the proposed technical solutions of the new SMA class is that it includes at least one of the following features:

- at least one Z-CTV subsystem containing a set of one or a group of motors located perpendicular to the $\lambda$-plane SMA and TPS (TPS-thrust producing surface), which are designed to allow a vertical or vertical-horizontal thrust with one side of the motor and the vertical-horizontal thrust on the other side of the motor;
- includes, one of the types of FPGB, selected from the series:

  (A) CR (C, $\in$) FP - curvilinear-rotational, selected from the series: CR (C, $\in$) ↑ FP - with outer-directed blades; CR (C, $\in$) ↓ FP - with inner-directed blades; CR (C, $\in$) ↕ FP - with bi-directional blades;

  (B) BF (C, $\in$) FP - reciprocating (rectilinear or curvilinear motion of reciprocating form) selected from the series: BF (C, $\in$) ↑ FP - with outer-directed blades; BF (C, $\in$) ↓ FP - with inner-directed blades; BF (C, $\in$) ↕ FP - with bi-directional blades.

  (C) circular rotational (RR (C, $\in$) FP with dispersed ICL (ICL - drive coupling zone) made with inner-directed blades RR (C, $\in$) ↓ FP with dispersed ICL or with bi-directional blades RR (C, $\in$) ↕ FP) with dispersed ICL;

  (D) De FP is a differentiated one, chosen from the set $\{\prod_{k=1}^{N}[(RR,\ CR,\ BF)]^{|_k}\}(s,\ r)\ FP,$ performed nondegenerate (the first cascade consists of one constituent member) or degenerate (the first cascade consists of two or more constituent members).

Other differences of the proposed technical solutions of the new SMA class are that:

- the shape of its body is chosen from a number of forms: drop-shaped; longitudinally half-deciduous; pan-shaped; disk-shaped; two-angled with rounded corners; passenger car or other form, including streamlined;
- it is executed chosen from a number: single-hull; multi-hull, which can be: longitudinally multi-hull; cross multi-hull; transversely-longitudinally multi-hull;
- its motor is made in the form of a channel-oblique FP and the plane of rotation of FP with respect to the axis of the channel of FP is located at an angle $\gamma6$, the value of which is limited within $\pi / 10 \leq \gamma6 \leq \pi/2$;
- its wing is made with the possibility of changing the area, and selected from a number of folding foW: frame-curtain; accordion-shaped; telescoping folding; button-folding; fan-folding;
- its folding wing foW is made with a rowing end;
- its mushroom end is made of the chosen one: one-piece; with a flap;
- its folding foW wings are made with a rectangular-triangular integral or ramp with an acute angle $\gamma3$, limited within $0 \leq \gamma3 \leq \pi/3$, to fix foW to the SMA body at a certain angle;
- its folding foW wings are made with a single end bent by a top or double ends bent in different directions - top and bottom with respect to the $\lambda$-plane of SMA;
- its FP motor is made of a series selected from: two-channel FP, where each channel includes FP; one-channel FP - one or more motors in one channel;
- blades of its FP with a bladed base are connected through the bearing beams, the length of which tends to the difference between the averaged half-length and the averaged half-width of the SMA hull;
- in its Z-CTV subsystem, the rear of the front component of the TPS covers the front of the motor channel from below, and the front of the rear component of the TPS covers the rear of the motor channel from above;
- its Z-CTV-subsystem is made with a constant configuration or with the possibility of changing the mutual configuration of its components;
- its Z-CTV subsystem, with a variable mutual configuration of its components, is designed to allow the direction of the jet to change from a tangent to the $\lambda$-plane of SMA to the perpendicular to the $\lambda$-plane of SMA;

- it includes one or more Z-CTV subsystems, executed: above the hull; symmetrically on the two sides of the hull; above the hull and symmetrically on the two sides of the hull;
- its Z-CTV subsystems are located symmetrically on the two lateral sides of the hull in the adjacent (adjacent to the hull) areas or at some distance from the hull;
- the shape of the motor channel of the Z-CTV subsystem is selected from the series: a straight axis; curvilinear, including arcuate axis;
- the shape of at least one of the output and inlet holes of the motor channel is formed by a one-sided or two-lateral groove shaped, with the open portion of the inlet groove (holes on the front of the SMA) of the motor channel pointing upward to the SMA, the open portion of the outlet opening from the rear of the SMA) of the motor channel is pointing down the SMA;
- its Z-CTV subsystem located symmetrically on the two sides of the casing, the lateral trough of the one-sided trough-shaped inlet and / or outlet of the motor channel is located on the far side of the SMA hull;
- the shape of the hull constituting the TPS, at the places of their contact with the motor channel are made with the possibility of minimizing the drag;
- the shape of the hull and components of the TPS, at the intervals of their intersection with the motor channel, repeat the shape of the motor channel, which repeats the external shape of the motor;
- it is made two-wing and at least one of the front wing and rear wing is made by a traction / protrusion to create a TPS together with a wing, or TPS is created by wings;
- it is made in the form of a hybrid of a helicopter airplane and additionally includes vertical thrusters;
- it includes at least two vertical thrusters selected from the series: located symmetrically on the two sides of the hull, front and at the level of the front lower wing and/or as continuation along the length and at the level of its short front lower wing; located symmetrically on the two sides of the hull, as continuation along the length and at the level of its short rear wing; located at the level of the rear upper wing and as a continuation of the tail of the SMA;
- it is performed a single-wing, and the inlet of the motor channel is located above the wing, the outlet of the motor channel is located under the wing;
- it is made in the form of a hybrid helicopter-airplane and additionally includes vertical thrusters;
- it includes, as far as possible, one vertical thruster selected from the series: one large-diameter motor, containing in the central annular part the whole hull or its part; two motors located symmetrically on two sides of the hull; two motors are located symmetrically on two sides of the hull in the front of the wing, and the third motor located at the wing level at its rear part and as a continuation of the tail part of the SMA;
- the shape of its wing is made of a selected from the series: obtuse; wedge shaped; truncated-wedge-shaped; rectangular; truncated-deltoid, but not limited to these shapes;
- the shape of its wing, in a one-winged type, is flat or curved, at least in one of two mutually perpendicular directions;
- the shape of its wing, executed with curvature;
- it is made in the form of a flying disk (saucer) or other shape of a flying object around which one or more motors are located, characterized in that its motors are made in the form of a large diameter FP selected from the series:

  (A) CR (C, $\complement$) FP - curvilinear-rotational, selected from the series: CR (C, $\complement$) $\uparrow$ FP - with outer-directed blades; CR (C, $\complement$) $\downarrow$ FP - with inner-directed blades; CR (C, $\complement$) $\updownarrow$ FP) - with bi-directional blades;

  (B) circular rotational RR (C, $\complement$) FP made with inner-directed blades RR (C, $\complement$) $\downarrow$ FP or with bi-directional blades RR (C, $\complement$) $\updownarrow$ FP;

  (D) De FP is a differentiated one, chosen from the set $\{\prod_{k=1}^{N} [(RR,\ CR,\ BF)]^{|_k}\}(c,\ r)\ FP,$ performed nondegenerate (the first cascade consists of one constituent member) or degenerate (the first cascade consists of two or more constituting members);

- it additionally includes one or more horizontal thrust motors;
- it is made in the form of a helicopter with provision of possibility of vertical lift and flight, including the significant size vertical thruster FP, separately located above the hull and connected to the hull through a connecting system, characterized in that it is made with FP type selected from the series:

  (A) CR (C, $\complement$) FP - curvilinear-rotational, selected from the series: CR (C, $\complement$) $\uparrow$ FP - with outer-directed blades; CR (C, $\complement$) $\downarrow$ FP - with inner-directed blades; CR (C, $\complement$) $\updownarrow$ FP - with bi-directional blades;

  (B) circular-rotational RR (C, $\complement$) FP made with inner-directed blades RR (C, $\complement$) $\downarrow$ FP or with bi-directional

blades RR (C, Є) ↕ FP;

(D) De FP is a differentiated one, chosen from the set $\{\prod_{k=1}^{N}[(RR, CR, BF)]^{|_k}\}(c, r)$ FP, performed nondegenerate (the first cascade consists of one constituent member) or degenerate (the first cascade consists of two or more constituent members).

- its vertical thruster is made of a series: with a ring full-interval ICS (ICS - the Induction coupling surface), a stator and a rotor block; with a ring full-interval ICS of one of the stator and rotor blocks with sector ICS of another; with sector ICS of stator and rotor blocks;
- it additionally includes a folding wing foW;
- it additionally includes: one or more horizontal thrust motors, for example, in the form of a pushing FA in the rear of the SMA/ h; vertical and/or horizontal direction control system during flight;
- its vertical thruster is designed to provide the possibility of compact folding when not in use - during flight, as an aircraft horizontally and/or during parking;
- it is made in the form of a compact helicopter or a compact flying hybrid with the ability to access each of the components of the SMA, selected from the series: salon; rear under-capote part, the front under- capote part, and characterized in that it includes at least one feature selected from the series:

  (A) comprises a front under-capote motor system comprising at least one vertical thruster;
  (B) comprises a rear under-capote motor system including at least one vertical thruster;
  (C) comprises a over-salon flat-folded motor system including at least one vertical thruster;
  (D) contains a flat-folded side support system;

- it includes at least one folded fragment on the rear and/or upper side of the hull, configured to control the horizontal direction of movement of the SMA during its flight;
- it further includes at least one horizontal draft motor selected from a series: pushing motor located in behind of the hull in which jets of the current medium enter through two lateral channels and exit through two rear channels; the first stage of De FP, executed with a variable configuration; FP set over the SMA salon, made with providing possibility of rotation perpendicular to the -plane by an angle γ6 within $0 \leq \gamma6 \leq \pi / 2$ around axes going through points of its attachment;
- it is made in the form of an all-terrain vehicle, and for movement along the surface chosen from the series: liquid (for example water), solid precipitation (e.g. snow), highway, swamp; appropriate additional vehicles are installed, for example selected from the range: wheels, tracks, rowing FP, skis;
- its blades are made sectorally and/or folded in a parking lot or when moving;
- its motor is made of a selected type of FP, with the possibility of fulfilling a condition selected from the series: providing vertical thrust; providing horizontal thrust; providing vertical-horizontal thrust;
- its FP is made in the form of De FP with a variable configuration, and the first stage of which is designed to provide the possibility of creating a horizontal thrust during the flight of the SMA;
- its flat-folded side support system is located above the upper level of the side and/or front viewing window, and includes:

  (A) lateral motors, in particular in the form of FP, each of which is connected to the SMA salon via beams, and when not in operation, they fold and tightly press against the SMA hull;
  and / or
  (B) two groups of sectors designed to be able to be unfold symmetrically from both sides of the salon, while the width and length of each sector tends, respectively, to the width and length of the SMA salon, and in each group the sectors are connected to each other so that they can be folded, partially or completely, above the salon, each sector being selected from a series: a connecting frame that does not prevent the flow of jets of the current medium through it; frame with motor; sector wing;

- its flat-folded side support system is designed to be able to compactly fold completely or partially over the SMA salon;
- its front and rear under-capote motor systems are designed to provide at least one of the conditions selected from the series: located below the lower level of the rear and front viewing window; projection-screen observation of the environment,
and includes:

(A) at least one of the series: front under-capote motor; rear under-capote motor, which are designed to provide, respectively, anterior-frontal or antero-oblique unfolding on the beam, and a rear-frontal or rear-oblique unfolding on the beam,

and / or

(B) two groups of sectors designed to be able to be unfold symmetrically on both sides of under-capote part of the hull, while the width and length of each of the sectors tends, correspondingly to the width and length of the under-capote part of the SMA hull, and in each group the sectors are connected to each other with providing possibility of folding, partially or completely, in the under-capote part of the hull, while each sector being selected from a series: a connecting frame that does not interfere with the passage of jets of the current medium through it; frame with motor; sector wing;

- at least one of the motors of the vertical thrust of the front and rear motor of the under-capote motor system is designed to telescopically extend it from the front edge of the SMA salon, to a distance R - greater than the length of its blades, to unfold the FP and rotate the FP blades;
- it additionally includes a flat-folded side support system;
- its over-salon folding system is located above the upper level of the front and / or rear viewing window, and includes at least one motor, in particular an FP, performed above the salon and with the possibility of vertical or vertical-horizontal thrust;
- its overhead flat folding system is made of a series of FPs: CRrS ↑ FP, whose curvilinear form tends to repeat the shape of the SMA/a hull; RRrC ↑ FP, whose blades are connected to the ring motor through beams, the length of which tends to the difference of the half-length and half-width of the SMA/a hull;
- its over-salon flat-folded system is designed with the possibility of compact folding over the SMA salon;
- it additionally includes a flat-folded side support system.

The present invention can be implemented in many embodiments, and only certain embodiments that contribute to a better understanding of the proposed technical solutions will be described by way of the examples presented in the accompanying drawings.

Note that all objects in the figures are presented in a schematic form.

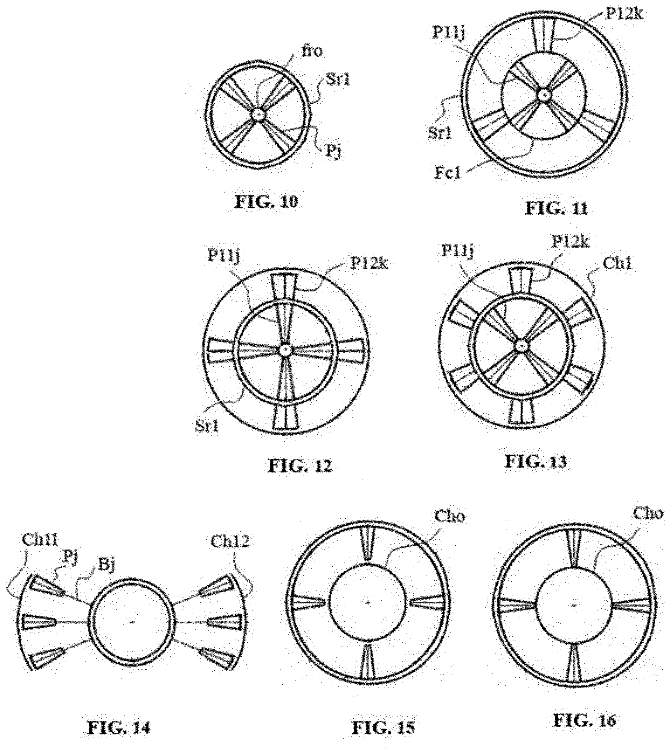

In Fig. 10-19, in the projection onto the $\lambda$-plane of FPGB and FP, various kinds of FPGB are shown, in the form of RR (C, $\in$) FP with dispersed ICL, where RR (C, $\in$) FP is a circular-rotational collinear or noncollinear form of FP.

In Fig. Figures 10-13 show the different RRs (C, $\in$) FP with a central solid part of concentrated FP species.

In Fig. 10 and 11, RRs (C, $\in$) ↓ FP (RRs (C, $\in$) ↓ FP - with inner-directed blades FP types) are shown. In this regard, Fig. 11 RRs (C, $\in$) ↓ FP is made with a separating ring Fc1 and disconnected P11j and P12k blade parts.

In Fig. 12 and 13 show two types of RRs (C, $\in$) ↕ FP (RRs (C, $\in$) ↕ FP - with bi-directional blades of the form FP): Fig. 12 is made with a single and equal number of external- (P12j) and internal- (P11j) directed parts of the blades P1j; in Fig. 13 is made with disconnected and different amount of external- (P12j) and internal- (P11j) directed parts of blades P1j.

In Fig. Figures 14-19 show the different RRr (C, $\in$) FP - ring types of FP.

In Fig. 14 shows RRr (C, $\in$) ↑ FP with outer-directed blades FP, whose blades are concentrated in two sectors and are bounded by two Ch11 and Ch12 sector channels. Each blade is connected to the paddle base on Sr1 (Sr1 - dispersed ICL) through the supporting beam, for example, the Pj blade with the bearing beam Bj. Fig. 14 shows six blades which, during rotation, can be evenly distributed along the azimuth angle. In principle, the number of blades can be four, which are X-shaped relative to each other.

Fig. 15 and 16 show RRr (C, $\in$) ↓ FP with inner-directed blades of the FP species. In this case: Fig. 15 RRr (C, $\in$) ↓ FP is made with unconnected channel Cho; in Fig. 16 RRr (C, $\in$) ↓ FP is performed with the connected channel Cho.

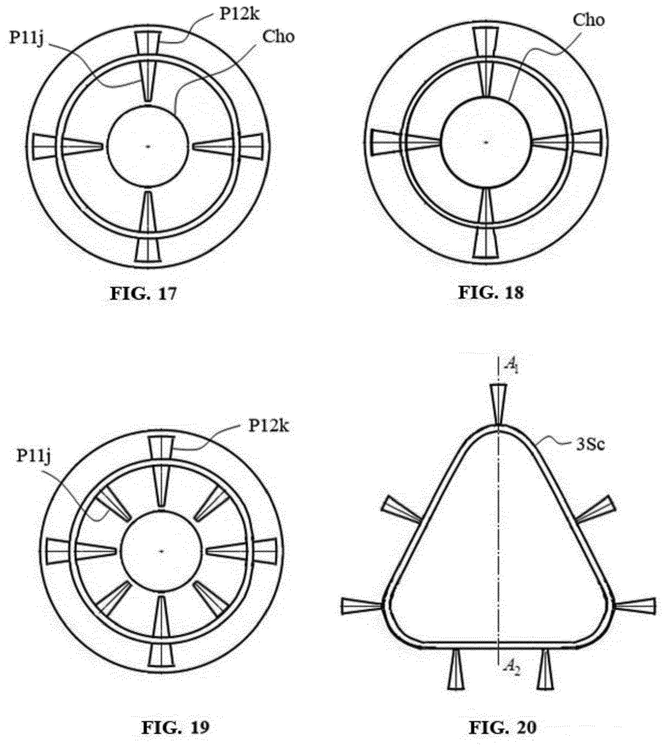

Fig. 17-19 show RRr (C, $\in$) ↕ FP with bi-directional blades of the FP species. In this case: in Fig. 17 and 18 it is made with a single and equal number of externally (P11j) and internally (P12j) directed parts of the blades P1j; in Fig. 17 RR (C, $\in$) ↕s FP it is made with unconnected channel Cho, and in Fig. 18 RRr (C, $\in$) ↕ FP it is performed with the connected channel Cho; in Fig. 19 RRr (C, $\in$) ↕ FP it is executed with a different number of externally (P11j) and internally (P12j) directed parts of the blades;

Fig. 20-25 show FPGB in the forms CRr (C, $\in$) FP (CRr (C, $\in$) FP - curvilinear rotational collinear or noncollinear FP species) with the corresponding ICL and/or IDL.

Fig. 20-24 show CRr (C, €) ↑ FP - with outer-directed blades of FP types: in Fig. 20 it is made with a triangular shape with rounded corners, which coincides with the triangular 3Sc shape of the ICL and/or IDL region; in Fig. 21 it is made with a contour of rotation of a two-cornered shape 2Sc with rounded corners - in a form in which the two sides are made in the form of straight lines, and two ends are made in the form of sectors of a circle; in Fig. 22 it is formed with a rotation contour of a quadrangular shape the 4Sc with rounded corners; in Fig. 23 it is made with a rotation contour of the ellipsoid the eSc.

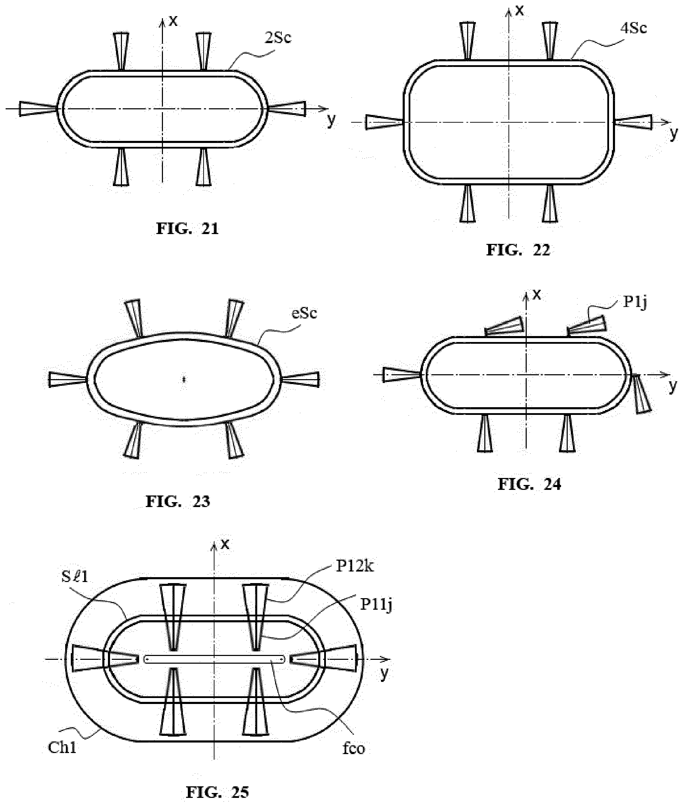

In CR (C, €), the FP can be designed so that its blades effectively interact with its surrounding fluid in only one of their directions of movement on the side portions and / or the end portions. In this case, the periodicity of the effective interaction with the surrounding ambient medium, depending on the direction of motion, can be achieved by: changing the inclination of the blade, as shown in Fig. 24; changing the area of the blade; axial rotation of the blade; changing in the angle of attack.

The considered CR (C, €) FP have the same diversity as RRr(C, €) FP. For example, Fig. 25 shows CRs (C, €) ↕ FP, performed by a concentrated and with a single center fco. In this case, CRs (C, €) ↕ FP is made: with a ICL of a two-sided shape Sℓ1 with rounded corners; with bi-directional blades, inwards with directed parts P11j of blades, external directed parts P12j of blades; with external channel Ch1.

In Fig. 20-25, the indicated shapes of the rotation contours in the form coincide with the corresponding ICL regions.

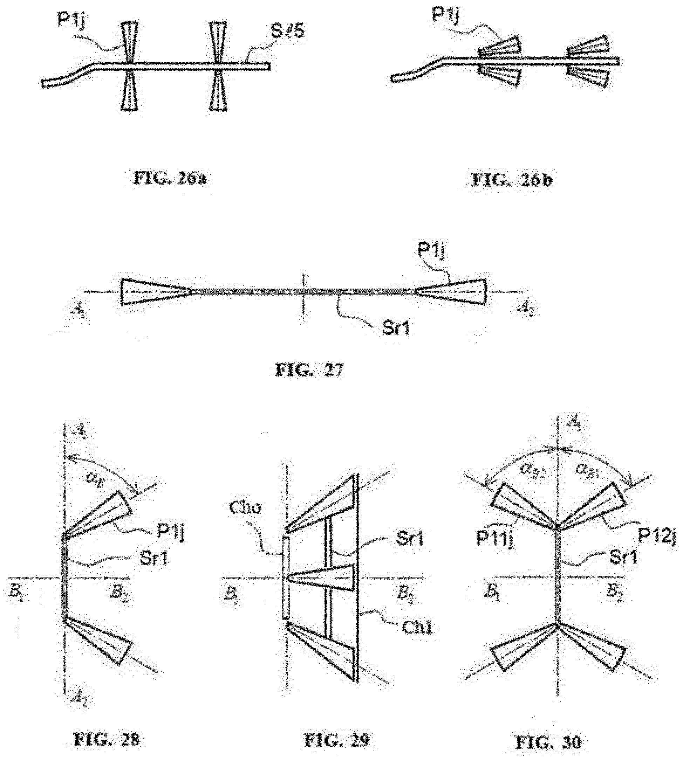

In Fig. 26a and 26b in the projection to the $\lambda$-plane FP the BF (C, €) ↕FP (BF (C, €) ↕FP are shown - reciprocating collinear or non-collinear with bi-directional blades FP) of curvilinear motion with ICL and/or IDL curvilinear shape Sℓ5.

In BF (C, €) ↕FP, its blades P1j must effectively interact with the surrounding current (related to it) medium in only one of their directions of motion. At the same time, the efficiency of interaction with the surrounding ambient medium, depending on the direction of motion, can be achieved by: changing the inclination of the blade, as shown in Fig. 26b; changes in the area of the blade; axial rotation of the blade; with a change in the angle of attack.

In Fig. 27-30 in the projection to the h-plane of FPGB and FP, FPGBs are shown including different types of (RR, CR) r (C, €) FP with dispersed ICL and/or IDL ((RR, CR) r (C, €) FP - rotational, collinear or noncollinear ring types of FP).

Fig. 27 show (RR, CR) rC ↑ FP - collinear with outer-directed blades FP,

Fig. 28 shows (RR, CR) r€ ↑ FP - noncollinear with externally bidirectional blades FP, where: $\alpha_B$ - angle between the $\lambda$-plane FP and the blades P1j; Sr1 - dispersed ICL and/or IDL. Fig. 29 shows (RR, CR) r€↕ FP - non-collinear with bidirectional continuous blades FP, where: Cho - internal channel; Ch1 - external channel, Sr1 - dispersed ICL.

Fig. 30 shows (RR, CR) r€↕ FP - a noncollinear type with blades of different directions to the -plane of FP type. In this case, the angles $\alpha_{B1}$ and $\alpha_{B2}$ between the $\lambda$-plane FP and, respectively, P11j and P12j, the parts of the blades P1j can take different values.

Under the conditions $\alpha_{B1} = \alpha_{B2} = \pi / 2$, the one shown in Fig. 30, FP become the orthogonal two-shoulder blades. In the absence of one of the P11j and P12j parts of the blades P1j, the same FP become orthogonal to one shoulder the blades.

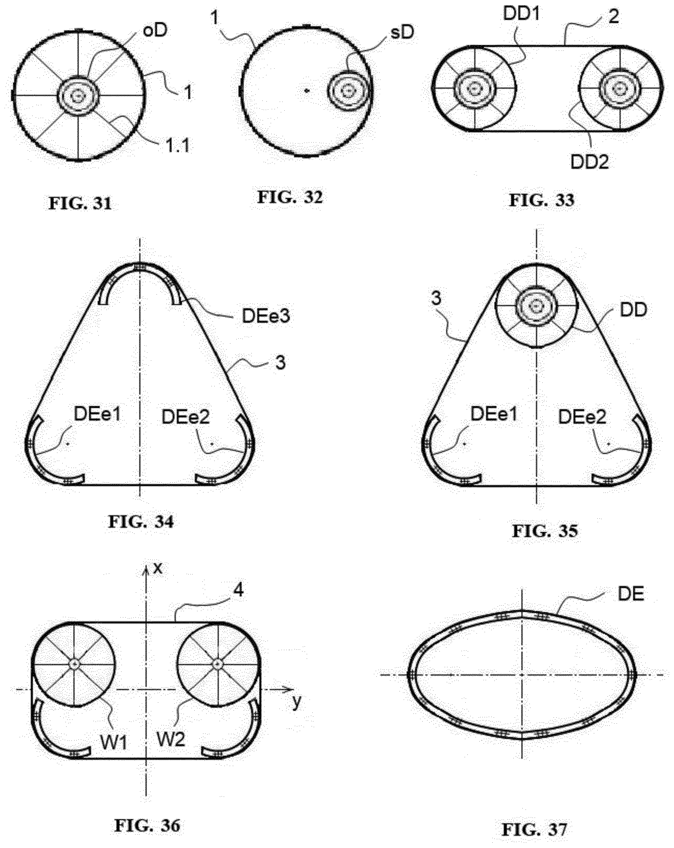

In Fig. 31-37 in the projection to the $\lambda$-plane of the FPGB, various types of the DCL structure are shown, presenting it in a simplified form as - drive system and CHM (CHM - characteristic line of the FP movement).

The IDL can be configured: with a central drive, as shown in Fig. 31; with a side drive as shown in Fig. 32; with a system of the angle forming elements including at least one angular drive, as shown in Fig. 33-36; using a shaping ICL drive, as shown in Fig. 37.

Fig. 31 shows a IDL with a circular CHM 1 with a central drive oD and with spokes 1.j.

Fig. 32 shows a IDL with a round CHM 1 with a side drive sD.

Fig. 33 shows a IDL with two-angled rounded corners CHM 2, formed with two angular disk drives DD1 and DD2.

Fig. 34 shows a IDL with rounded corners triangular CHM 3, formed by three sector direct electric drives DEe1, DEe2 and DEe3.

Fig. 35 shows the IDL with rounded corners triangular CHM 3, formed with three angular drives: a disk drive DD and two sector direct electric drives DEe1 and DEe2.

Fig. 36 shows a IDL with rounded corners of quadrilateral CHM 4 formed by two angular disk wheels W1 and W2 and two sector direct electric drives DEe1 and DEe2

In principle, IDL with rounded corners of polygonal CHM, for example shown in Fig. 33-35, or any other form of CHM, can be formed by a direct electric drive DE, as shown in Fig. 37.

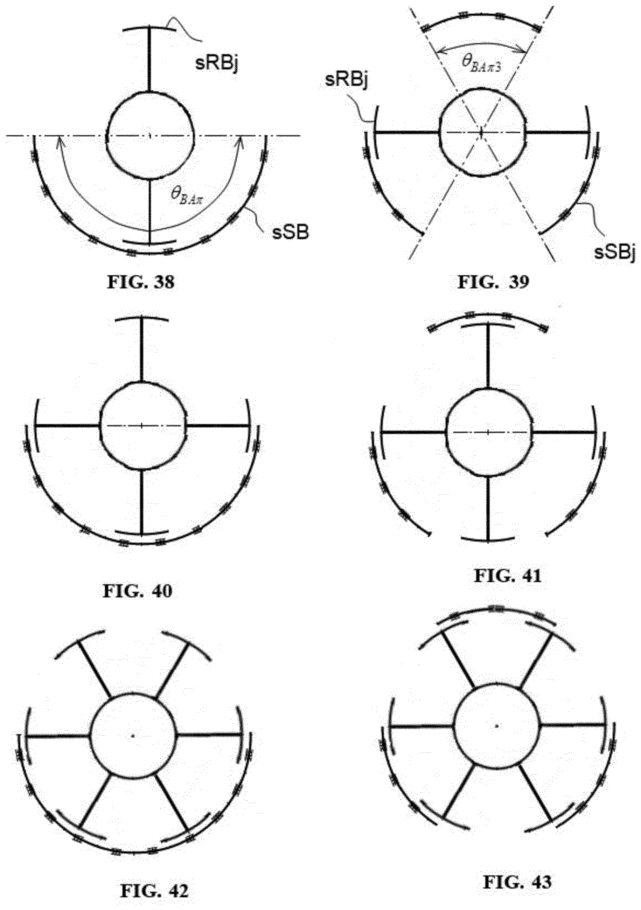

In Fig. 38-57 in the projection on the $\lambda$-plane of the FPGB, various types of ICS execution are shown with CHM (CHM-characteristic line contour of the FP) of the round rotation.

The technical and economic advantage of FPGB with sector ICS, for example EM with sector groups of electromagnets, compared to FPGB with the same power and with the full-interval ring ICS electromagnets is that one large electromagnet is more compact and has a higher efficiency, compared to several small electromagnets with the same total output power as one large electromagnet. These advantages of FPGB blocks with sector EM create great prospects for their wide application in terrestrial and air vehicles.

With reference to Fig. 38-57 it is assumed that the following conditions are satisfied: the constancy of the azimuthal angular distributions of the width and area of the sectoral ICS (ICS - the surface of the drive coupling) of rotor block; the constancy of the areas of the surfaces located in a simultaneous mutual drive engagement, regardless of the position of rotor block with respect to the stator block.

With one sector sSB of a stator block with an azimuth angle $\theta_{BA\pi} = \pi$, as shown in Fig. 38, or with three sectors

$$\theta_{BA\pi 3} = \frac{\pi}{3}$$

sSBj of stator block in an azimuth angle , each of them, where three sectors of stator block are located

$$\theta_{BA\pi 3} = \frac{\pi}{3}$$

at intervals with an azimuth angle , as shown in Fig. 39, half of the total area of the sector ICSs of the sRBj sectors of the two-sector (j = 1, 2) rotor block participates in the creation of the inductive coupling.

For the specified $\theta_{BA\pi} = \pi$ and $\theta_{BA\pi 3} = \frac{\pi}{3}$ distributions of the sectors of stator block, such pattern (the participation of half of the entire surface of the sectors of rotor block) is valid, as shown in Fig. 40-43, for any even number of sectors of rotor block.

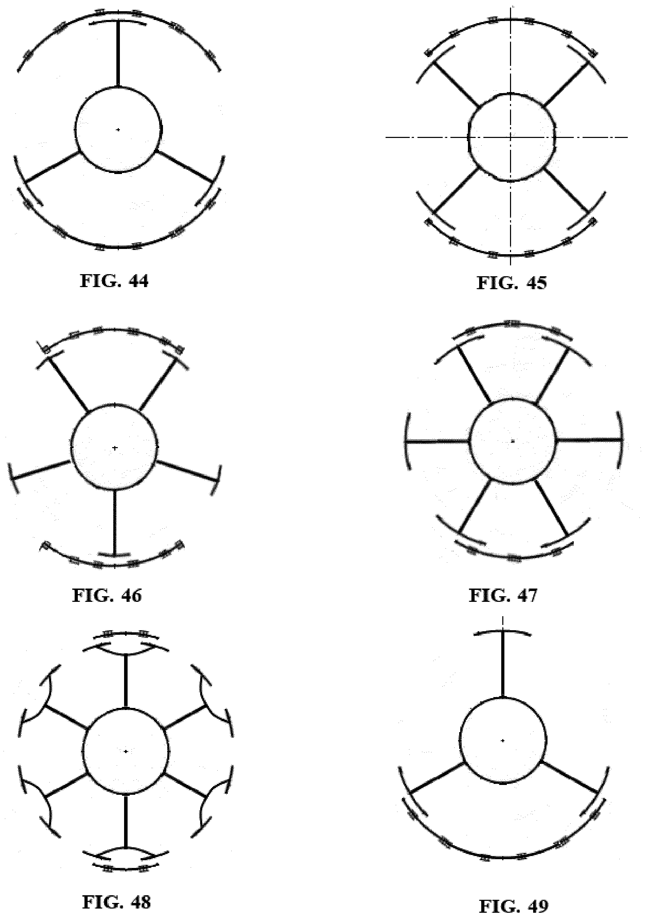

Fig. 44-48 show a number of examples for a different number of surfaces of the sectors of rotor block in the

$$\theta_{BAj} = \frac{2\pi}{N_{Pj}}$$

distribution of two sectors of stator block with an azimuth angle in the arc of each equal and located on the opposite sides of the IDL. In this case, two sector ICSs of rotor block participate in the creation of the inductive coupling.

Fig. 49-51 show a number of examples for a different number $N_{Pj}$ of sector ICSs of rotor block with one sector

$$\theta_{BAj} = \frac{2\pi}{N_{Pj}}$$

of a stator block with an azimuth angle of $\cdot$ At the same time, one sector ICS of rotor block participates in the creation of the inductive coupling.

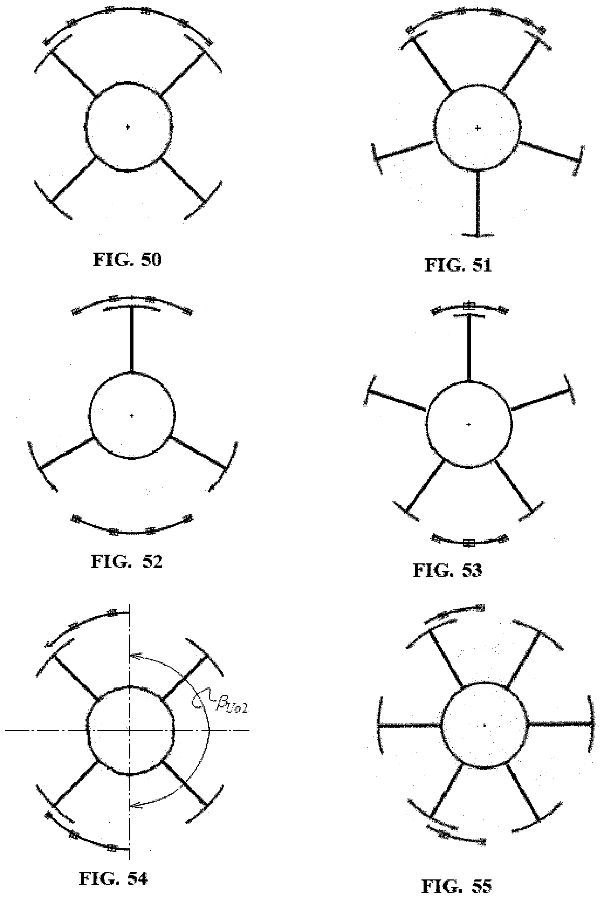

Fig. 52-55 show a number of examples for a different number of sector ICSs of rotor block in the distribution

$$\theta_{BAj} = \frac{\pi}{N_{Pj}}$$

of two sectors of stator block, each of which is made with an azimuth angle $\cdot$ At the same time, one sector ICS of rotor block participates in the creation of the inductive coupling. Moreover, for an odd number of sector ICSs of rotor block, the sectors of stator block are arranged as shown in Fig. 52 and 53, on the opposite sides of the IDL; for an even number of sector ICSs of rotor block, the sectors of stator block are arranged as shown in Fig. 54 and 55, so that, on one hand, the azimuthal angular interval between them is $\beta_{Uo2.} = \Pi$.

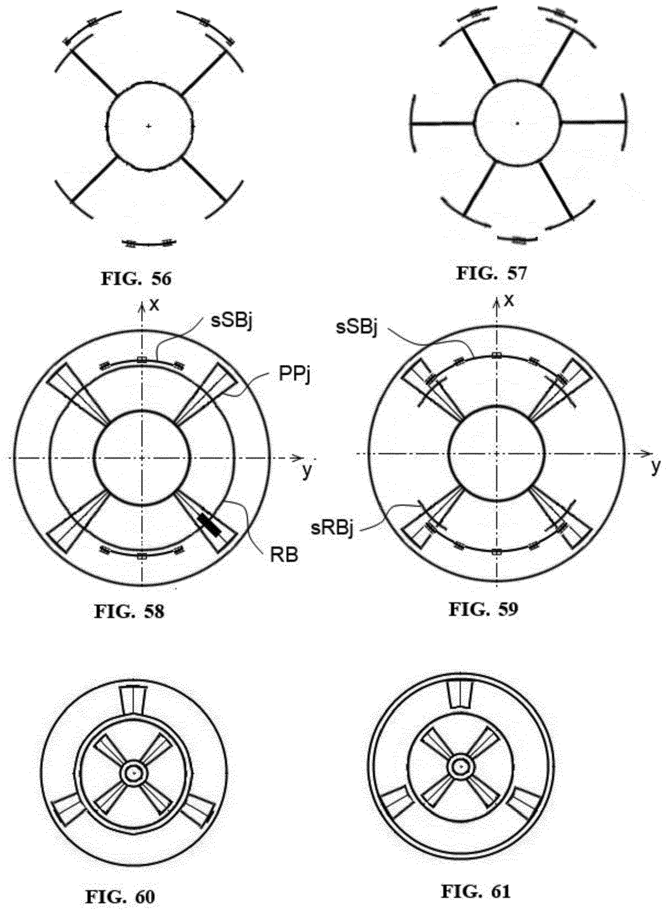

Fig. 56 and 57 show a series of examples for a different even number $N_{Pj}$ of sector ICSs of rotor block with

$$\theta_{BAj3} = \frac{2\pi}{3N_{Pj}}$$

three sectors of stator block, each of which is made in an arc with an azimuth angle $\cdot$ In this case, two sectors of stator block are arranged as shown in Fig. 52 and 53, at an azimuthal angular distance equal to

$$\theta_{BAj3} = \frac{2\pi}{3N_{Pj}}$$

. The third sector of stator block is located on their opposite side. At the same time, one sector ICS of rotor block participates in the creation of the inductive coupling.

Fig. 58 and 59 show examples of the arrangement of the blades Pj: Fig. 58 shows a rotor block RB with a full-interval annular ICS and for two sectors sSBj of stator block, where j = 1, 2; Fig. 59 shows the surfaces of rotor block with four sector ICSs of rotor block (sectors sRBj, where j = 1, 2, 3, 4), and for two sector ICS (sectors sSBj) of stator block, where each azimuth angle of the arc of stator block is equal $\theta_{BAj} = \frac{2\pi}{4}$ and is located on the opposite sides of the ICL. Fig. 58 and 59 show four blades Pj, but in principle, the number of blades for any distribution of the surfaces of the sectoral rotor and stator blocks can be arbitrary.

With reference to Fig. 38-59, the distribution of the fixed part (stator) and moving part (rotor) of the FPGB it is suitable in some cases a direct electric drive. In some cases, for example for a mechanical drive, it may be more appropriate that the rotor in Fig. 38-59 became a stator and the stator became a rotor.

In Fig. 60-74b in the projection to the $\lambda$-plane FPGB, FPGB is shown in the form of De FP with two (N = 2) cascaded zones in the set $\{ \prod_{k=1}^{N} [(RR, CR, BF)]^{|_k} \}(s, r)$ FP.

In Fig. 60-71 in the projection onto the $\lambda$-plane FPGB, various non-degenerate types of De FP execution with two (N = 2) cascaded zones in $\{ \prod_{k=1}^{N} [(RR, CR, BF)]^{|_k} \}(s, r)$ FP are shown. In this case, the last expression takes the form $\{[(RR, CR, BF)]^{l2} [(RR, CR, BF)]^{l1}\}(s, r)$ FP.

In Fig. 60-68 are shown the execution types $\{[(RR, CR, BF)]^{l2} [(RR, CR, BF)]^{l1}\}$ s FP ($\{[(RR, CR, BF)]^{l2}[(RR, CR, BF)]^{l1}\}$ s FP - continuous two-cascade-differentiated types of FP).

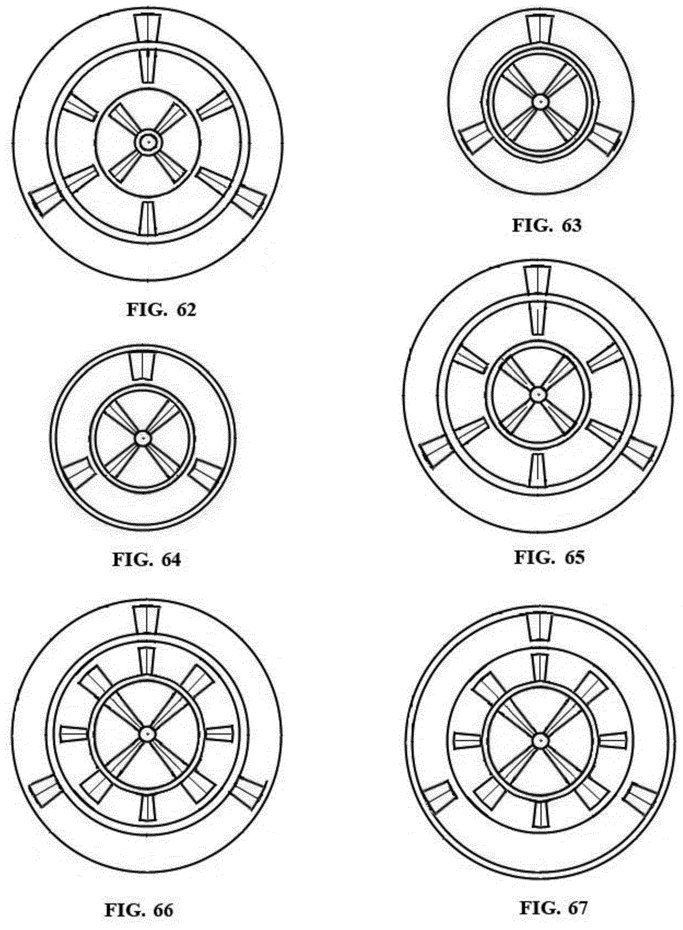

Fig. 60-62 show the execution types $\{RR(C, \subset)i^{l2}RR(C, \subset)\uparrow^{l1}$s FP with the central ICL: in Fig. 60 shows $\{RR(C, \subset)\uparrow^{l2}RR(C, \subset)\uparrow^{l1}$s FP with central ICL; Fig. 61 shows $\{RR(C, \subset)\downarrow^{l2} RR(C, \subset)\uparrow^{l1}$ s FP with central ICL; Fig. 62 shows $\{RR(C, \subset)\updownarrow^{l2}RR(C, \subset)\uparrow^{l1}$s FP with the central ICL.

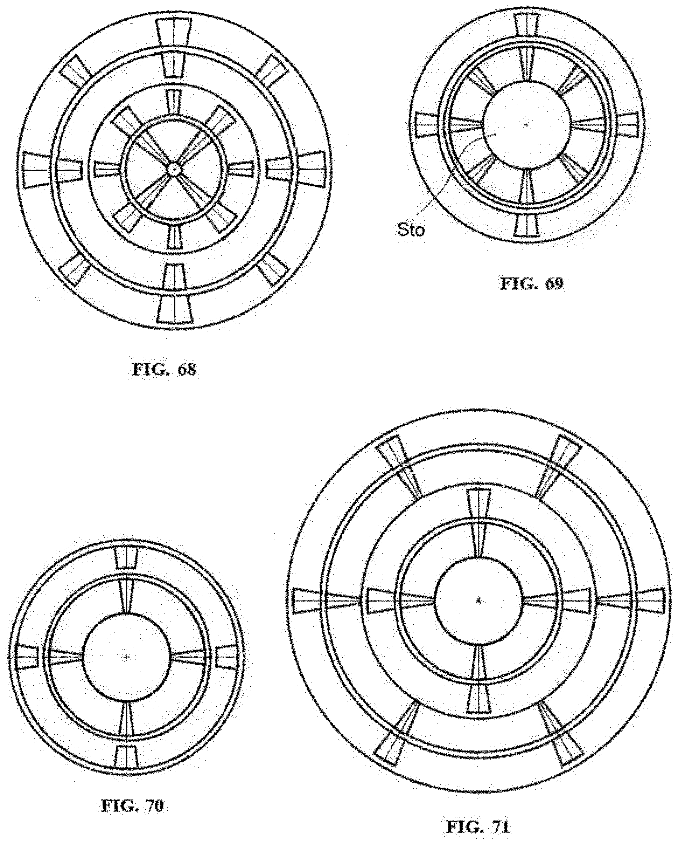

Fig. 63-65 show the execution types $\{RR(C, \subset)i^{l2} RR(C, \subset)\downarrow^{l1}$s FP with dispersed ICL: Fig. 63 shows $\{RR(C, \subset)\uparrow^{l2}RR(C, \subset)\downarrow^{l1}$ s FP with dispersed ICL; Fig. 64 shows $\{RR(C, \subset)\downarrow^{l2}RR(C,\subset )\downarrow^{l1}$s FP with dispersed ICL; Fig. 65 shows $\{RR(C, \subset)\updownarrow^{l2}RR(C, \subset)\downarrow^{l1}$s FP with dispersed ICL. Fig. 66-68 show the execution types $\{RR(C, \subset)i^{l2}RR (C, \subset)\updownarrow^{l1}\}$s FP: Fig. 66 shows $\{RR(C,\subset )\uparrow^{l2}RR(C, \subset)\updownarrow^{l1}\}$s FP; Fig. 67 shows $\{RR(C, \subset) FP\downarrow^{l2} RR(C, \subset)\updownarrow^{l1}\}$s FP; Fig. 68 shows $\{RR(C, \subset)FP\updownarrow^{l2}RR(C, \subset)\updownarrow^{l1}\}$s FP.

Based on the logic for creating different types of FP from the set $\{[(RR, CR, BF)]^{l2}[(RR, CR, BF)]^{l1}\}$s FP in Fig. 60-68, it is not difficult to construct a different kind of FP from the set $\{[(RR, CR, BF)]^{l2}[(RR, CR, BF)]^{l1}\}$r FP, as well as any FP from the set with any number of differentiation stages.

In Fig. 69-71, some examples of the execution of FPGB species from the set $\{ [(RR, CR, BF)]^{l2}[(RR, CR, BF)]^{l1}\}$ r FP are shown. Moreover, these figures are analogous to Fig. 63, 64 and 68, respectively, and differ only in that they are made annular, i.e., with the annular region Sto in their central parts.

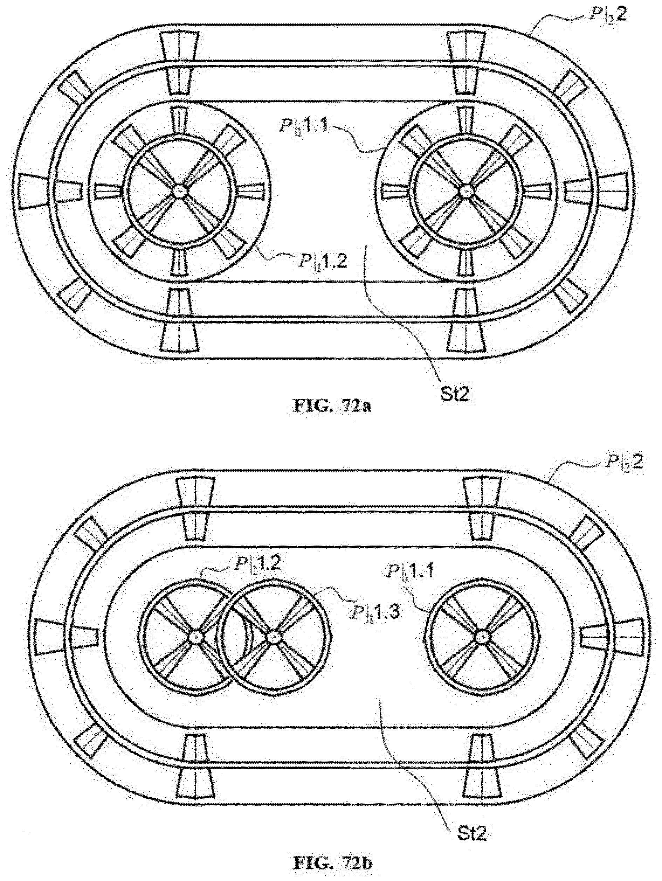

In Fig. 72a and 72b in the projection to the $\lambda$-plane FPGB, various degenerate types of FPGB execution are shown in the form of a two-stage continuous De FP with integral free surfaces St2 inside the second cascade.

In Fig. 72a shows the degenerate FP $\{CR\updownarrow^{l2}[RR\updownarrow^{l1}, RR\updownarrow^{l1}]\}$s FP with two $P^{l1}1.1$ and $P^{l1} 1.2$ the components of the first stage, each of which is made in the form of $RR\updownarrow^{l1}$ with bidirectional blades distributed by ICL.

In Fig. 72b shows the degenerate FP $\{CR\updownarrow^{l2}[RR\downarrow^{l1}, RR\downarrow^{l1}, RR\downarrow^{l1}]\}$s FP with three $P^{l1}1.1$, $P^{l1}1.2$ and $P^{l1}1.3$ identical components of the first stage, each of which is in the form of $RR\downarrow^{l1}$ with inner-directed blades distributed ICL. In this case, the components of the first stage $P^{l1}1.2$ and $P^{l1}1.3$ are partially covered by one another.

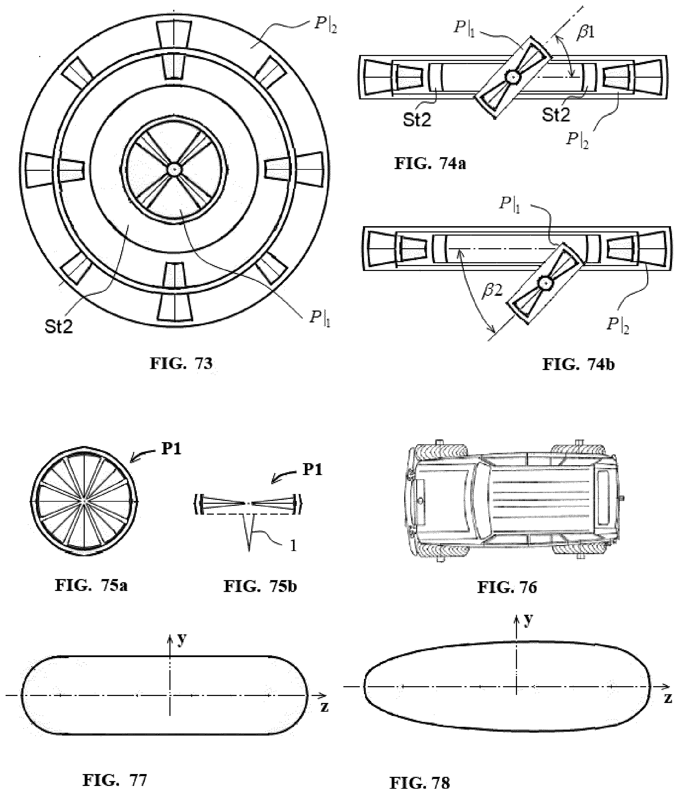

In Fig. 73, 74a and 74b shows a FPGB with De FP, made with a variable configuration (the components are arranged to change orientation relative to each other) and with an integral interstrate surface St2 within the second stage. In Fig. 73, shows De FP in the projection onto the $\lambda$-plane FP with the first $P^{l_1}$ and second $P^{l_2}$ cascades. In Fig. 74a and 74b in the projection on the FPGB-plane indicate some possibilities for changing the configuration shown in Fig. 73 De FP: in Fig. 74a is made so as to be able to pivot $P^{l_1}$ by an angle $\beta 1$ within the range $0 \leq \beta 1 \leq \pi / 2$ around the axis passing through its axial point; In Fig. 74b is arranged to rotate $P^{l_1}$ perpendicularly to the plane of rotation thereof by an angle $\beta 2$ within the range $0 \leq \beta 2 \leq \pi / 2$, relative to a predetermined point at the boundary of the first $P^{l_1}$ and second $P^{l_2}$. In principle, the whole-executed free surface St2 within the second stage, in Fig. 73, 74a and 74b may be omitted.

In Fig. 75a and 75b in the projections respectively on the $\lambda$-plane FPGB and on the h-plane FPGB show different possibilities for performing FP-wings, which can selectively operate in two modes, both FP and the wing. In Fig. 75a shows FP1, in which its blades Pj can close interlobble slots due to a change in their areas in the plane of their rotation. Fig. 75b shows FP1 with a flap 1, which when the flap is open, as shown in Fig. 75b, can create a lift. When the flap 1 is closed, it completely closes the FP1 from its lower side and converts FP1 into a wing.

Fig. 76-82 show some examples of the outer shell shape of the SMA.

The SMA housing can be made in any form, including, as shown in Fig. 76, in the form of a car.

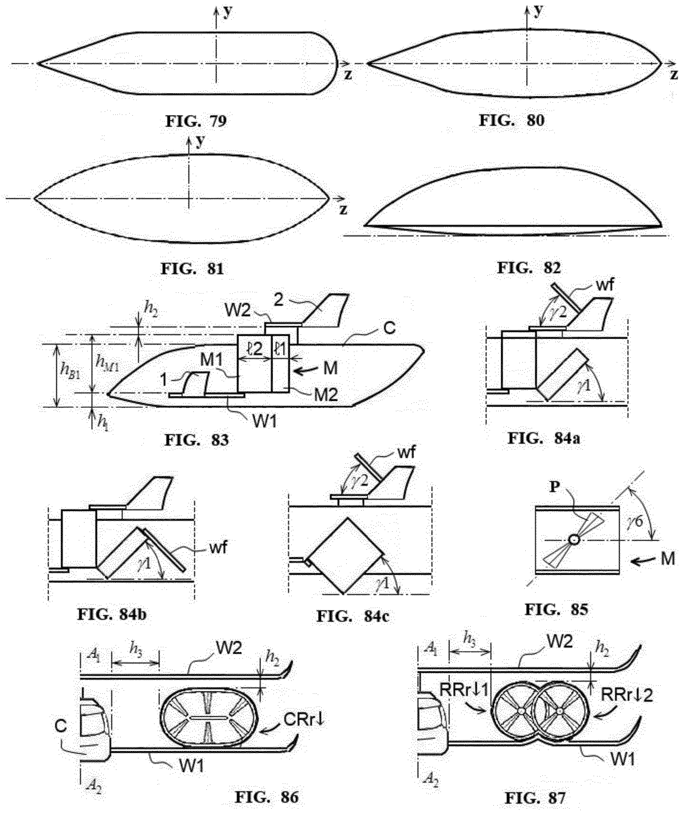

The ones shown in Fig. 77-81 forms can refer to the form of the body with rotational symmetry with respect to the longitudinal axis Z or to the shape of the body in projections onto the $\lambda$-plane SMA. On the lower side, the types of casings having no rotational symmetry can be made differently, in particular: convex with curvature in two mutually perpendicular directions, as shown in Fig. 82; It is convex with curvature in one direction; Flat.

The hull shape shown in Fig. 82 can be considered as part of the drop-shaped volume shown in Fig. 81 and it can be called semi-droplet.

Fig. 83-105 show the possibilities of performing SMA with two Z-CTV subsystems located symmetrically on the two sides of the SMA hull.

Fig. 83 shows an SMA with a Z-CTV subsystem in the projection on the longitudinal h-plane of SMA. In this case, the following notation is introduced: W1 - lower wing; W2 - upper wing; M1 - the first part of the motor (motor) channel; M2 - the second part of the motor channel; M - the motor; $\ell 1$ - length of the first part of the motor channel; $\ell 2$ - length of the second part of the motor channel; 1 - tip / tip of the lower wing; 2 - tip / tip of the upper wing; C - housing. The distance $h_1$ between the lower level of the body C and the upper level of the lower wing W1 is limited to $0 \leq h_1 \leq h_{B1}$, where $h_{B1}$ - the height of the hull. The distance $h_2$ between the upper motor level and the lower level of the upper wing W2 is limited to $0 \leq h_2 \leq h_{M1}$, where $h_{M1}$ is the motor height.

In Fig. 83, as the hull C is the fuselage of a cargo aircraft of known shape. In principle, any suitable volumetric object can serve as a hull.

In Fig. 84a-84c, on a fragment of the SMA bounded on both sides by vertical dashed lines, some examples of the configuration change of the components of the Z-CTV subsystem are shown, it is made so that the angle $\gamma 1$, between the output plane of the motor channel and the SMA plane, $\leq \gamma 1 \leq \pi / 2$. In this case, simultaneously with the change in the angle $\gamma 1$, the position of the part of the upper wing can change, in order to open the space to create a top-down draft and vertical draft. In Fig. 84a it is shown that part wf of the upper wing with rising angle $\gamma 2$ rises upward and tears away the space to create an exhaust jet directed from the top to the bottom. In Fig. 84b, it is shown that the upper wing portion wf attached to the upper side of the second portion of the motor channel is lowered with increasing angle $\gamma 1$ along with the upper side of the second part of the channel, thereby separating the spaces to create a top-down draft jet. In Fig. 84c shows that the same possibilities for changing the configuration of the components of the Z-CTV subsystem shown in FIG. 84a and 84b, can be carried, in principle, and in cases of a single (not divided into two) motor channels.

In Fig. 85, a channel-oblique FP in which the plane of rotation FP with respect to the axis of the channel FP is located at an angle $\gamma 6$, the value of which is limited within the range $\pi / 10 \leq \gamma 6 \leq \pi / 2$, is shown in section.

In Fig. 86-89 in front of the SMA are some examples of the performance of motors in the structure of the Z-CTV subsystem. The vertical axis $A_1 A_2$ is the SMA symmetry axis and only one half of the SMA is shown on each figure.

In Fig. 86 and 87 show that the motor can be placed tightly to the hull as $h_3 \to 0$, or at some distance from the body at $h_3 \neq 0$. In this case, the motor of the Z-CTV subsystem can be of any kind, in particular, as shown in FIG. 86, may be an FP of the form CRrC $\downarrow$ FP or as shown in FIG. 87, can be in the form of a system consisting of several FPs (in Figure 86 two are shown - RRCr $\downarrow$ FP1 and RRCr $\downarrow$ FP2) that partially overlap each other). In Fig. 86 and 87 show straight wings, but the wings can be curved up or down.

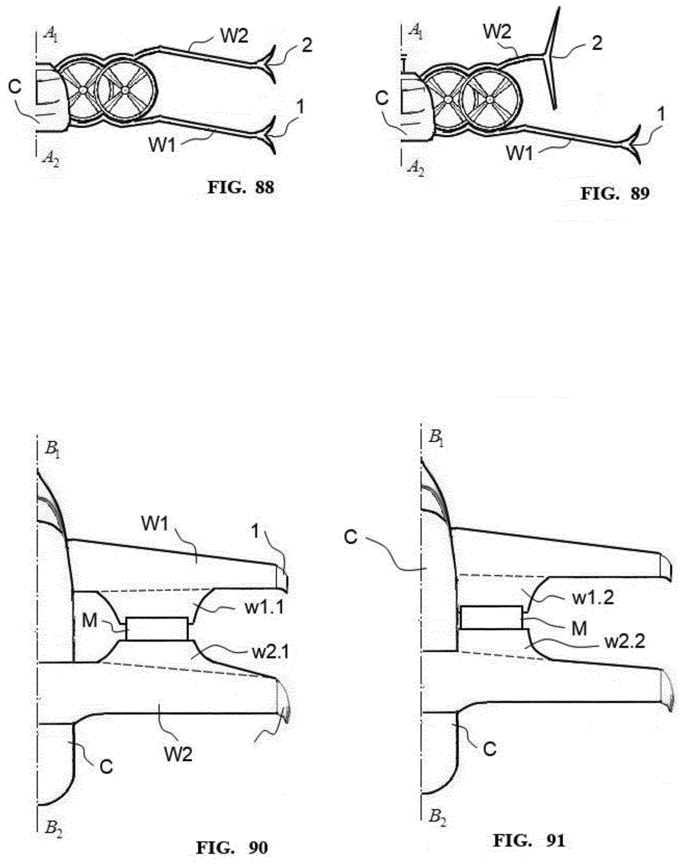

In Fig. 88 and 89 show some examples of wings and their endings / tips. In the interval of their intersection with the motor channel, the wings W1 and W2 are repeated the shape of the motor channel to reduce the drag of the Z-CTV subsystem. The wings are made of kinks. Endings / tips of the wings are made with two branches 1 and 2, which are directed in different directions. In Fig. 89, the upper wing W2 is shortened and its tip / tip 2 with two branches that are directed in different directions, have significant dimensions, and can be used to control the horizontal direction of flight.

In Fig. 90-93 in the projection onto the $\lambda$-plane SMA some examples of the structure of the Z-CTV subsystem in conjunction with the hull C are shown. In these and subsequent figures, the axis $B_1B_2$ is the axis of symmetry of the regarded SMA and only one half of the SMA is shown in the figures.

Fig. 90 and 91 show some examples of the performance of the lower W1 and the upper W2 of the wings by appendages-pedestals. In Fig. 90, the appendages-pedestals w1.1 and w2.1 for creating the horizontal thrust and the motor M are made at some distance from the hull C. In Fig. 91, to create a horizontal thrust, the appendages-pedestals w1.2 and w2.2 and motor M are located close to the hull C.

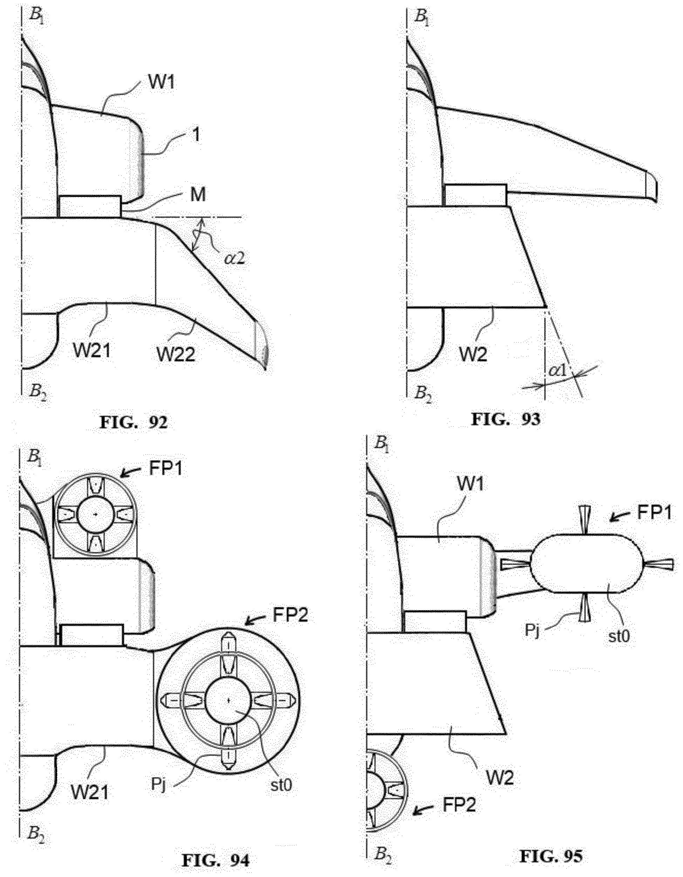

Fig. 92 and 93 show Z-CTV subsystems with truncated wings W1 and W2.

In Fig. 92, the lower wing W1 is formed by a shortened and curved end tip/ thimble 1, the height of which can be significant so that the vertical thrust created by the motor M on W1 is significant. The upper wing W2 is made by a kink at an angle $\alpha2$, the value of which is within the range $0 \leq \alpha2 \leq \pi / 3$.

In Fig. 93 the upper wing W2 is shortened and delta-shaped.

The shown in Fig. 90-93 SMAs can be used as aircrafts. They can be attached to the rear of the system to control the horizontal and vertical directions of flight.

The ones shown in Fig. 90-93 SMAs can be used as the basis for creating hybrids of aircraft-helicopters. For this, as shown in some examples in Fig. 94 and 95, vertical thrust motors FP1 and FP2, which are located at the level of the wings W1 and W2, must be additionally attached to them. In Fig. 94 and 95 the vertical thrust motors FP1 and FP2 are represented as FP, but they can in principle be motors of any kind. Note that the motors FP1 and FP2 can be made folding. For example, they can be connected to the SMA in a looped form and in the parking lot they can turn on their hinges and lie on the SMA.

In Fig. 95 FP1 is made in the form of CRC $\uparrow$ rFP, and its elongated closed central region st0 can serve as an additional second part of the lower wing.

In Fig. 94 FP2 vertical draft is made in the form of RRC $\uparrow$ rFP, and its round closed central area st0 has a small area and it is ineffective as a wing. Therefore, it is advisable to use FP2 in conjunction with the folding wing foW, attaching it to the first part of the W21 upper wing. In this case, FP2 will be located at some distance hP from the folding wing foW plane and W21 plane.

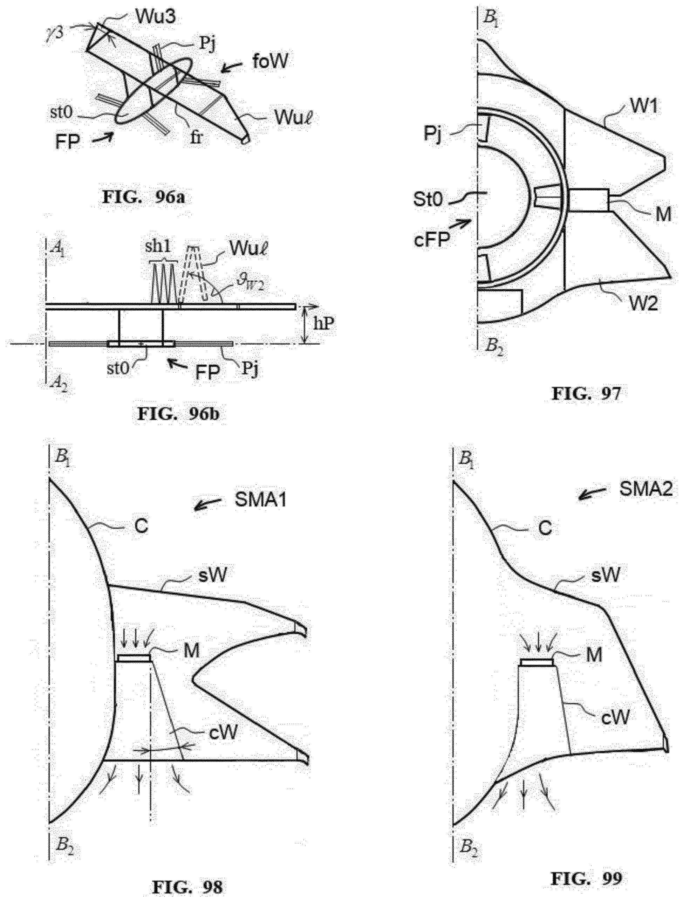

The arrangement of one of the folding wing types foW, made by a curtain-folding one, is shown in Fig. 96a and 96b together with FP: Fig. 96a shows its three-dimensional image without curtains; Fig. 96b shows its image in the projection onto the transverse h-plane of SMA. In Fig. 96a and 96b, the following symbols are introduced: Pj - one of the blades of FP; Fr - frame for curtains; Wu$\lambda$ - rowing curtain end of the wing foW; Sh1 - curtain; $\vartheta_{W2}$ - angle of folding of the rowing end. In Fig. 96b, the sh1 curtain is shown opened, the Wu$\lambda$ rowing end is shown in two different states: folded - drawn in dashed lines; decomposed - drawn in solid lines. At the angle $\vartheta_{W2} = 0$, the rowing end is fully expanded. The base of the folding wing foW can be made with a rectangular-triangular integral protrusion with an acute angle $\gamma3$ bounded within $0 \leq \gamma3 \leq \pi / 3$ to be fixed to the SMA hull at a certain angle. The WU$\lambda$ rowing curtain end of the wing foW can be made in one-piece, and there is no need to cover its middle with curtains.

In Fig. 94 and 95, SMA-type hybrids of helicopter-airplanes with a Z-CTV subsystem were shown, in which the vertical thrusters are located on the periphery of the SMA hull. SMA-type hybrids of helicopter-aircraft with Z-CTV subsystem, can be made with a central motor of vertical thrust. Such an example is shown in Fig. 97, where: cFP is the central FP of the vertical thrust drawn in the form of RRrC $\downarrow$ FP; St0 - round closed central area RRrC $\downarrow$ FP; M - motor of the Z-CTV subsystem; Pj is one of the RRrS $\downarrow$ FP blades. In this case, the SMA hull is partially or completely located under St0.

Fig. 98-111 show single-winged SMA with a Z-CTV subsystem. In these figures, the thin lines with arrows show the directions of the jets created by the motors of the Z-CTV subsystem.

In Fig. 98-105 single-winged aircrafts are shown in the form of SMA aircrafts with Z-CTV subsystems, where the horizontal thrust motors M of the Z-CTV subsystem are located on the periphery of the SMA hull. In these figures, the following meanings are also introduced: C - SMA hull; sW - wing; M - horizontal thrust motor in the structure of the Z-CTV subsystem; cW - open from below the wing exit channel for the exit of the stream of the current medium from the motor M under the wing; cW1 - wing channel cW with arcuate upper guide sidewall; cW2 - wing channel cW with straight upper guide sidewall.

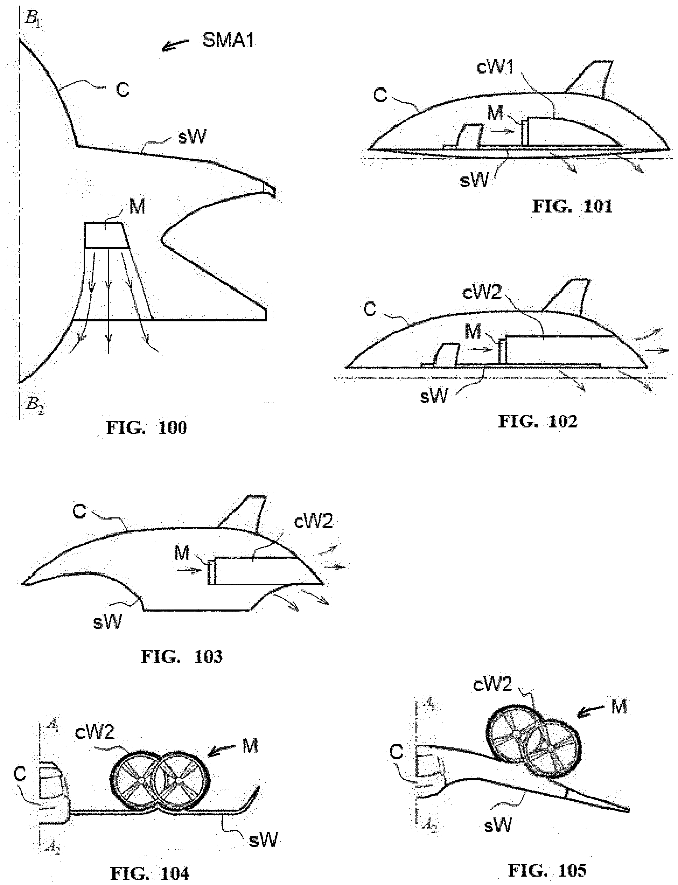

In Fig. 98 and 99 in the projections on the $\lambda$-plane of SMA are shown SMA1 and SMA2 from above, respectively, with a branched, lower- mounted of hull C, the wing sW and, with a non-branched, top-mounted of hull C, the wing sW. Only two types of wing are shown here, in principle in Fig. 98 and 99, the wings may be formed in any other shape, for example a triangular or deltoid shape. Fig. 100 shows SMA1 from the bottom. In Fig. 101 and 102, in the projection on the longitudinal h-plane SMA, cW1 and cW2 the two types of execution of the wing channel for the output jet from the motor M are shown. The wing channels cW1 and cW2 for the outlet jet from motor M are open from the underside. With the arcuate top guiding sidewall, channel cW1 creates more vertical thrust and less horizontal thrust than channel cW2 with a straight upper guide sidewall.

Fig. 103 shows the view of SMA2 in the projection on the longitudinal h-plane SMA with the wing channel cW2 with the straight upper guide sidewall for the output jet from motor M.

In Fig. 104 and 105 in the projection on the transverse h-plane in front of SMA are shown, respectively, SMA1 and SMA2. In this case, the motors M are shown in a schematic form, and are disproportionately increased in comparison with the hull C and the wing sW.

Single-winged SMA with a Z-CTV subsystem without special vertical thrust motors, including special cases shown in Fig. 98-105, can serve as aircraft. In order to use them as a hybrid aircraft-helicopter it is necessary to attach to them one or more vertical thrusters.

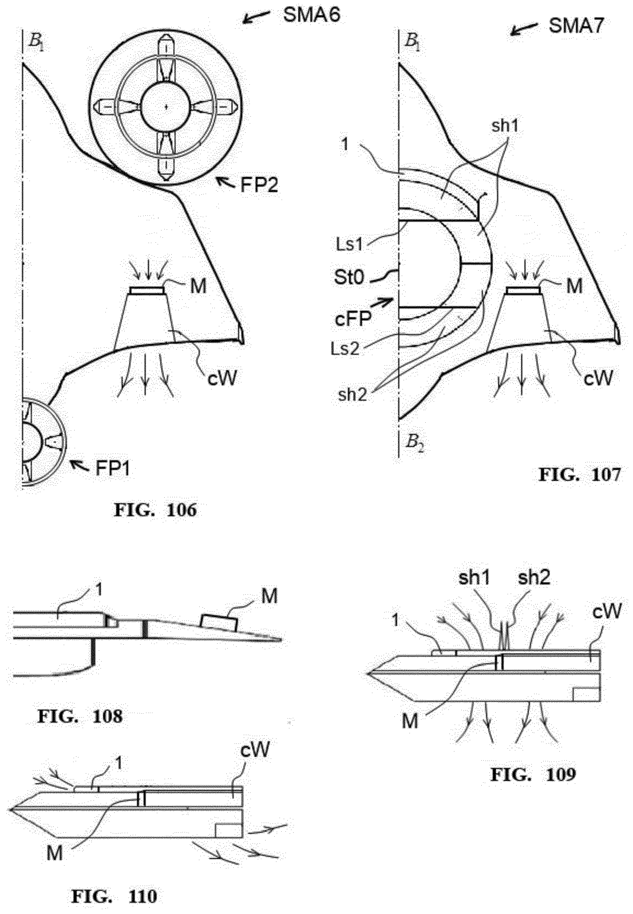

Fig. 106-110 show two SMA6 and SMA7 types of SMA, which in addition to the Z-CTV subsystem include one or more vertical thrusters.

In Fig. 106 and 107 in the projections on the $\lambda$-plane of SMA there are shown top of SMA6 and SMA7, where the vertical thrusters are located, respectively, on the periphery of the hull C and are made in the center of the SMA (with the central FP of the vertical thrust). In Fig. 106 and 107, the wings can be located at any height of the hull C from the lower level to its upper level. In this case, the wings can be selected from a number of shapes: bent upwards; bent down; straight.

In Fig. 106, the vertical thrusters FP1 and FP2 can be located at the same level.

In Fig. 108-110 in the projection onto the h-plane of SMA are shown SMA7, while in Fig. 107-110 the following designations were introduced: M - motor in the Z-CTV subsystem; 1 - window for horizontal entry of the stream of the current medium into the cFP vertical thrust motor, which is constantly in the open state; CW - the wing channel for the output of the current medium from the motor M of the jet; Sh1 - the first part of the curtain; Sh2 - the second part of the curtain; St0 - round closed central area of the vertical thruster cFP; Ls1 - hinge line for the folding of the first part sh1 curtains; Ls2 - hinged line of the fracture for folding the second part of sh2 curtains.

Fig. 108 shows SMA7 in the projection onto the transverse $\hbar$-plane of SMA.

Fig. 109 and 110 show SMA7 in the projection on the longitudinal h-plane of SMA.

Fig. 109 shows the operating status of the cFP vertical thrust motor during the SMA7 lift. In this case: the first part sh1 of the curtain and the second part sh2 of the curtain are open; the lower flaps (not shown) are in the open position; the rear side flap (not shown) is in the closed position. Under these operating conditions, the cFP creates jets of fluid from the top to bottom, which will lead to lift.

Fig. 110 shows the operating status of the cFP vertical thrust motor during the horizontal movement of the SMA7.

In this case: the first part sh1 of the curtain and the second part sh2 of the curtain are closed; the lower flaps (not shown) are in the closed position; the rear side flap (not shown) is in the open position. Under these conditions, the cFP creates jets of the current medium directed horizontally, which will result in a horizontal thrust of SMA7.

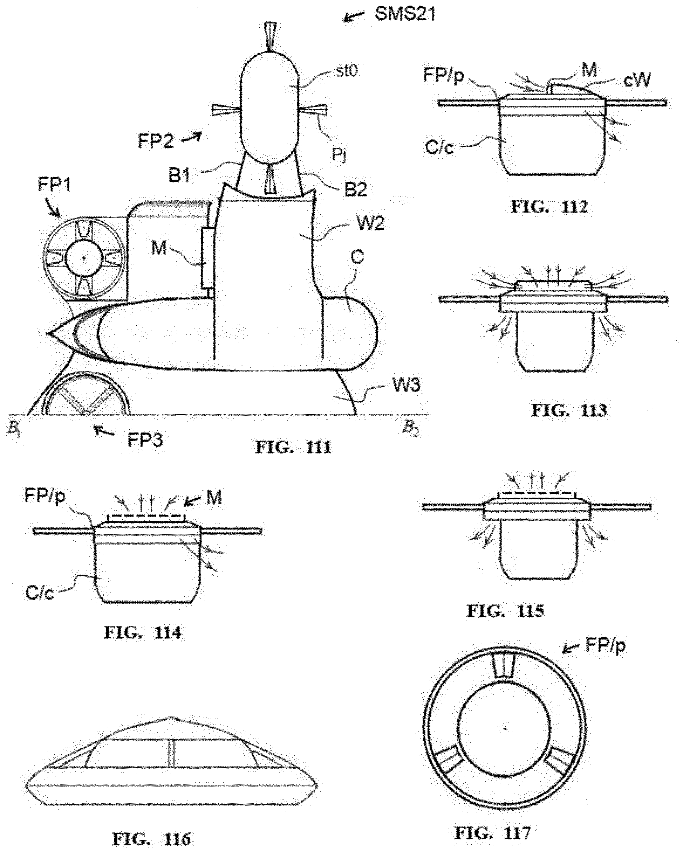

In Fig. 111 in the projections on the $\lambda$-plane of SMA are shown the top of the dual-hull SMA21, where the plane perpendicular to the plane of the figure and the plane passing through the axis is the plane of symmetry of the dual-hull SMA21. One possibility of performing dual-hull SMAs, as seen in Fig. 111, is when two identical SMAs are placed in parallel and on their adjacent sides, and instead of their previous wings and motors, two combining hulls and suitable, for example as shown in Fig. 111 new wing W3 and motor FP3 are set.

Fig. 112-117 show wingless SMA with a centroid hull C/c and around which the vertical thrust motor FP/p is located.

Fig. 112-115 show SMA, which additionally have horizontal thrust motors M.

In Fig. 112 and 113, respectively, in the projection on the longitudinal $\hbar$-plane of SMA and in the projection on the transverse $\hbar$-plane from the front are shown SMA with the channel c1, which contains the motor M, and they are designed so that a horizontal thrust can be created.

In Fig. 114 and 115 respectively in the projection on the longitudinal $\hbar$-plane of SMA and in the projection on the transverse $\hbar$-plane from the front are shown the SMA with a vertical inlet window and with controlled changes in the directions of the output jet of the motor M.

Thin lines with arrows show the directions of the motions of the jets of the current medium.

In Fig. 116 and 117, respectively, in the projection onto the $\lambda$-plane of SMA and in the projection onto the transverse $\hbar$-plane of SMA a flying disk is shown. As shown in Fig. 117, this flying disk from widely known flying disks differs in that the FP is made in the form of RRCr FP ↓. This makes it possible to reduce the noise in the cabin from the operating FPGB, since the FPGB is separated from the cabin. With the same external dimensions, the FPGB blocks made with distributed blade-like torque or inner-directed blades are significantly more energy-efficient than the known FPGB blocks with concentrated ICL and annular with outer-directed blades.

Also for its horizontal movement, a flying disk can be used with controlled changes in the directions of the output stream. Changes in the directions of the output jet, as is known, can be realized with the help of flaps.

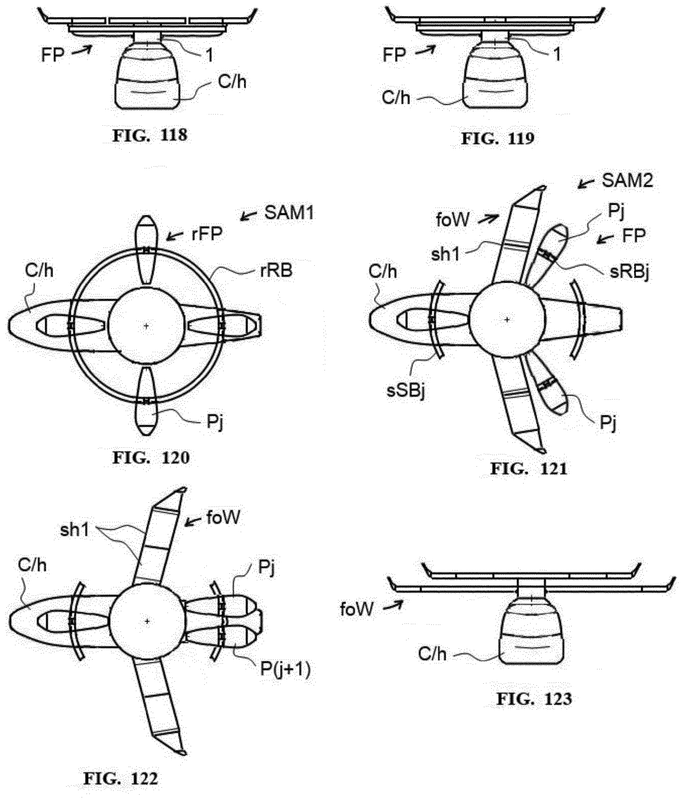

Fig. 118-122 show a typical series of the SMA/h type designed to provide vertical lift, for example, a helicopter that includes a significant size of a vertical pull rod FP separately disposed above the C/h hull and connected to it via the connecting system 1.

In Fig. 118 and 119 in the projection on the transverse $\hbar$-plane of SMA are shown the front of SMA / h, executed, respectively, with FP of the form RRrC$\updownarrow$ FP and RRsC$\updownarrow$ FP with distributed ICL. Such FP are essentially energy-efficient compared to the FP of the known type of RRsC $\uparrow$ FP, which are performed with a central ICL.

In Fig. 120-121, two SMA1 and SMA2 types of SMA/ h are shown from top of the $\lambda$-plane.

In Fig. 120, SMA1 is made with rFP, executed with a full-interval circular ICS (in the figure denoted as rRB) and four blades Pj;

Fig. 121 shows SMA2 with an FP motor with three sectoral types sRBj of rotor block surface attached to the blades Pj, and for two sSBj, where j = 1, 2, sectors of stator block. In this regard, in Fig. 121, SMA2 is equipped with a wing-folding wing foW, which is shown in Fig. 96a, 96b and described in the explanations to these figures.

Fig. 122 shows SMA2 with its horizontal flight - the wing sh1 of the wing is closed, the blades Pj and P (j + 1) are in a fixed and folded state.

Fig. 123 shows SMA2 from the front.

In Fig. 118-122, there are not shown horizontal thrust motors. They can be additionally executed in any known form, for example in the form of a pushing screw from the rear of the SMA/ h.

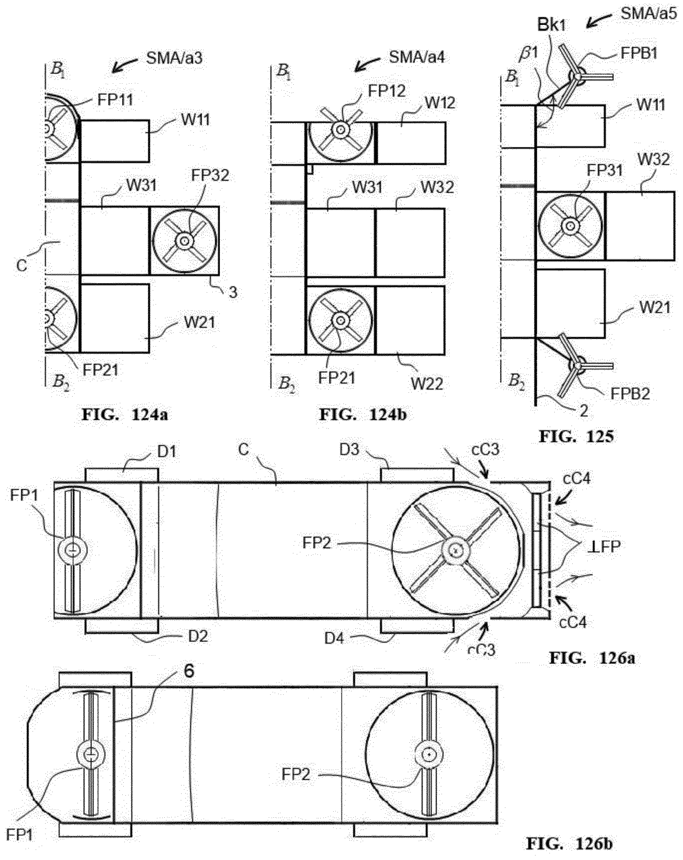

Fig. 124a-133 shows the main components of the SMA series, in the form of SMA/a, made compact and with the possibility of: compact folding for lift and flight inside gaseous medium, in a parking or moving on the interface between two media; unfolding of means for lifting and flying and, vertical and/or take-off and flight inside a gaseous medium.

On their basis, compact helicopters or compact hybrids can be created: shields; flying cars, including off-road vehicles; flying off-road vehicles, in the sense of movement over the surface chosen from: liquid (e.g. water), swamp, snow, rugged terrain, highway. To do this, it is required to choose the most suitable type of SMA/a for the required conditions of movement from the shown series, and additionally install the appropriate vehicles, for example selected from the wheel row, track, rowing FP, ski.

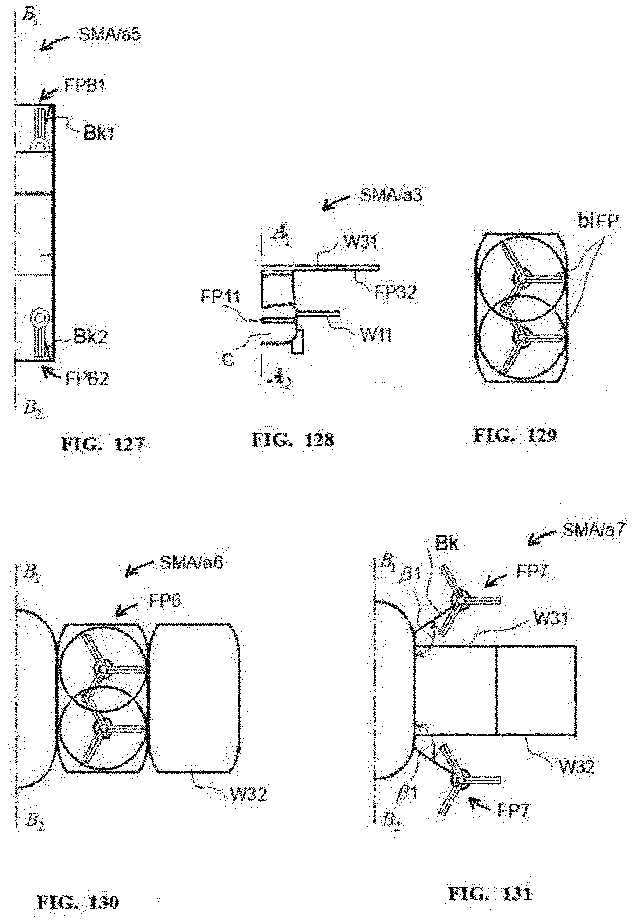

In Fig. 124a-127 in the projection on the $\lambda$-plane of SMA/a, in the Fig. 128, in the projection on the $\hbar$-plane of SMA/ a, the SMA/ a is shown, which include the front and / or rear under-capote mediums.

In this regard, Fig. 126a and 126b, four D1, D2, D3 and D4 wheels of the SMA/a are conditionally shown. In principle, depending on the purpose of the SMA/ a, other means can be used - supports for the helicopter or means for moving along the boundary of two environments.

In Fig. 124a, 124b and 125 are shown SMA/a in the deployed state for the flight, including the front and rear motor systems, as well as a flat-folding side support system where the following designations are introduced: W11 and W12, respectively, the near and far layers of the folding front wing covers of the under-capote motor system; W21 and W22 - respectively the near and far layers of the folding cover-wing of the rear under-capote motor system; W31 and W32 - respectively the near and far layers of folding cover-wings of an flat-folding side support system; FP11, FP12 and FPB1 - motors of vertical thrust of front under-capote motor system, designed to provide, respectively, front unfold, lateral unfold and oblique unfold on beam Bk1; FP21, FP22 and FPB2 - motors of the vertical thrust of the rear under-capote motor, made possible, respectively, the rear unfold, lateral unfold and oblique unfold on the beam Bk2; FP31 and FP32 are vertical thrust motors of an flat-folding side support system, designed to be capable of, respectively, near-lateral unfold, far-lateral unfold. In these figures, the vertical thrust motors are mainly made in frames 3. Under certain conditions, these vertical thrust motors can be made without a frame. Note that in principle, shown SMA/ a3, SMA/ a4 and SMA/ a5 can be performed, without one or two components from the series: front under-capote motor systems; rear under-capote motor systems; flat-folding systems of side support. In principle, the wings W3 and FP3 can be changed by positions.

Fig. 125 shows the double-layer rear side 2 of the SMA/a4 hull, which is opened only during SMA/a5 flight, and is designed to control the horizontal direction of the SMA/a during its flight. Such a device can be used in all flying SMAs.

The vertical thrust and wing motors on SMA/ a3, SMA/ a4 and SMA/ a5 when not in operation or when moving along the interface between two medium can be compactly folded, as shown in Fig. 126a, 126b, and 127. In these figures, to simplify the drawings, the folding cover-wings of the front and rear under-capote motor system are not shown, which, when not in operation, are folded, respectively, in front and rear of the cabin. In the non-working state, all or part of the components of the flat-folding side support system are folded over the SMA/a cabin.

The vertical thrust and wing motors on SMA/ a3 and SMA/ a4 can be folded as shown in Fig. 126a or as shown in Fig. 126b.

Fig. 126a shows the SMA/a with the front folding motor of the vertical thrust FP1, with the rear motor of the vertical thrust FP2 and the rear pushing motor of the horizontal thrust of the type $\perp$FP, which $\lambda$-plane is located vertically to the $\lambda$-plane of SMA/a. In this case, the rear pushing motor can be of any kind - FP or reactive. Thin lines with arrows show the directions of motion of jets of the current medium in the operating state $\perp$FP. As shown in Fig. 126a, the jets of the current medium enter through two side channels with C3 and exit through the two rear channels cC4. Such a pushing motor can be installed on any SMA/a.

Fig. 126b shows the SMA/ a comprising: a folding vertical thruster FP1 of the front under-capote motor system, designed to telescopically extend it to a distance R greater than the length of its blades to provide the motor blades with the necessary free space for their rotation.

Fig. 125 and 127 show SMA/a5 with four identical vertical thrusters, of which FPB1 and FPB2 are visible. All four vertical thrusters are made in the form of RRCr $\uparrow$ FP, which are connected by two front and rear underbody parts of the body SMA/a5 through the beams Bk. In the non-operating state, as shown in Fig. 127, they fold and fit into their respective under-capote parts of the hull. When folded, all the blades are collected in one line.

In Fig.128, in the projection onto the transverse h-plane of SMA, for example, in front of said SMA/a3 is shown.

Note that together with the circular rotational FPs shown in Fig. 124a-137, any other type of FP or, in part, overlapping the FP system may be used. An example of partially overlapping each other FP systems, in the form of biFP, is shown in Fig. 129 - two identical RRrS $\uparrow$ FP, which partially overlap each other.

Fig. 130 and 131 show SMA/a with a flat-folding side support system including at least one vertical thrust motor. In the non-working condition, all components of a flat-folding side support system, including the blades of the vertical thrust motors, compactly folds to the top part of the salon and/or over the SMA/a salon.

Fig. 130 shows SMA/ a6 in working condition, which has two layers of folding W32 cover-wings, and two layers of folding motor FP6 of vertical thrust of type biFP of flat-folding side support system.

Note that W32 wings for SMA/a6 may be absent.

In Fig. 131 shows SMA / a7 with four identical side FP7, made in the form of RRCr $\uparrow$ FP, which are connected to the hull of salon of SMA / a7 cabin via beams Bk. The motor FP7 of vertical traction, when not in operation, folds up and snaps into the hull of the SMA / a7 salon. When folded, all the blades FP7 are assembled in one line with Bk and the angle $\beta1 = 0$.

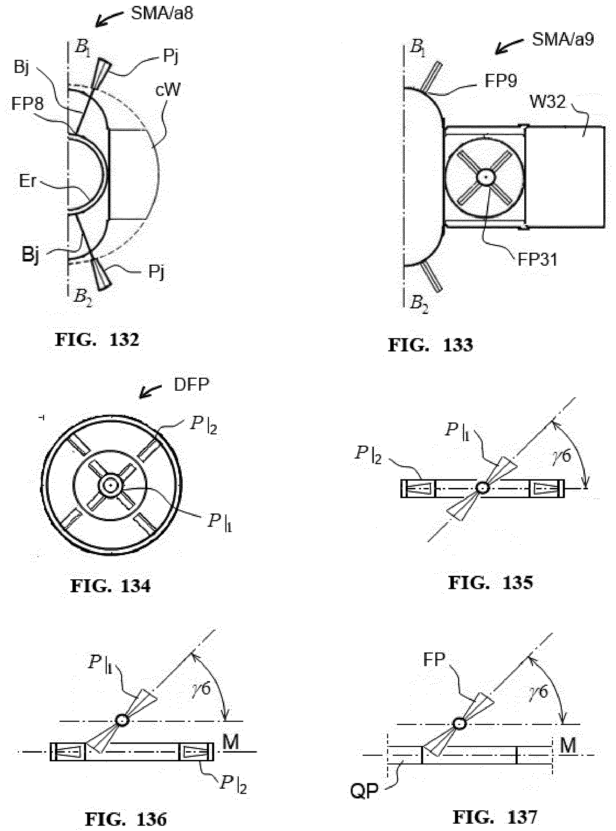

Fig. 132 and 133 show SMA/a, which are of the type comprising an over-salon flat-folding motor system including at least one over- salon vertical thrust motor. In the non-operating state, all the components of the over- salon flat-folding motor system, including the blades of the over-salon vertical thrust motors, are folded over the SMA/a salon.

Fig. 132 shows SMA/ a8, including the over-salon motor FP8 made in the form of RRrS $\uparrow$ FP, whose blades Pj are connected to the annular motor Er via beams Bj. In this case, SMA/a8 has two layers of a folding wing cW. Note that the wA wings of SMA/a8 may be absent. The length of the beam is approximately equal to the difference of the half-length and half-width of the SMA/a hull.

Fig. 133 shows SMA/a9 comprising: over-salon flat-folded motor system including the motor FP9 made in the form of CRrC $\uparrow$ FP, the curvilinear shape of which roughly resembles the shape of the SMA/a9 hull; flat-folded side support system, including the vertical thrust motor FP31 and the sector wing W32. Note that the flat-folding side support system consisting of FP31 in frame 3 and W32 on SMA/a9 may be absent or frame 3 may not contain FP31 and can serve to support W32 and do not interfere with the passage of a flow of the current medium.

An flat-folded side support system and / or over-salon flat-folded motor system can be directly connected to the hull or separate from the SMA/a hull and connected to the SMA/a hull via a special connection system.

As horizontal thrust motors of SMA/a can be used, as shown in Fig. 126a, a rear pushing motor of horizontal thrust of the type $\perp$FP, the $\lambda$-plane of which is located vertically to the $\lambda$-plane of SMA/a or other kind of horizontal thrust motors. As the motors of the horizontal thrust of the SMA, De FP can be used, for example as in Fig. 73, 74a and 74b, with varied configuration (the components vary in orientation relative to each other). In particular, any motor of the flat-folded side support system can be executed in the form of a De FP with a variable configuration. In this case, the first cascade $P^{l1}$ can be used, during a horizontal flight, to create a horizontal thrust.

One suitable SMA horizontal thrust motor is the De FP shown in Fig. 134, 135 and 136, in which the FP of the form RRcC $\uparrow$ FP is selected for the first cascade $P^{l1}$, for the second cascade $P^{l2}$ FP of the form RRrC $\downarrow$ FP is selected.

In Fig. 135, De FP is shown, provided that it is possible to rotate $P^{l1}$ by an angle $\gamma6$ within the range $0 \leq \gamma6 \leq \pi / 2$ around the axis passing through its axial point (place of attachment). Fig. 136 shows De FP made providing possibility of rotation $P^{l1}$ by an angle $\gamma6$ within the range $0 \leq \gamma6 \leq \pi/2$ with respect to a predetermined point on the boundary of the first $P^{l1}$ and second $P^{l2}$

Fig. 137 shows an FP made to provide possibility of rotation by an angle $\gamma6$ within the range $0 \leq \gamma6 \leq \pi / 2$ with respect to a given point (place of attachment) on the border FP. Such FPs can be used as horizontal thrust motors, for example, for this purpose, such an FP can be installed above the SMA hull.

The axes $B_1B_2$ and $A_1A_2$ indicated in the figures are the axes of symmetry of the objects under consideration, therefore, in the figures, mainly for simplifying the drawings, only one half of the object under consideration is shown.

**Claims**

1. FPGB (FPGB - propeller gear block) containing a propeller FP (FP-propeller) and a drive to supply power to it, the FP, which is selected from the series (C, $\in$, O) FP, where C FP is collinear, $\in$ FP - non-collinear; O FP - orthogonal kinds of FP.
The main difference between the proposed technical solutions of the new FPGB class is that it is made up of one of the FP types selected from the series:

(A) CR (C, $\in$) FP - curvilinear-rotational, selected from the series: CR (C, $\in$) ↑ FP - with outer-directed blades; CR (C, $\in$) ↓ FP-with inner-directed blades; CR (C, $\in$) ↕ FP) - with bi-directional blades;

(B) BF (C, $\in$) FP - reciprocating (rectilinear or curvilinear motion of reciprocating form) selected from the series: BF (C, $\in$) ↑ FP-with outer-directed blades; BF (C, $\in$) ↓ FP-with inner-directed blades; BF (C, $\in$) ↕ FP) - with bi-directional blades.

(C) circular rotational RR (C, $\in$) FP made with inner-directed blades RR (C, $\in$) ↓ FP or with bi-directional blades RR (C, $\in$) ↕ FP);

(D) De FP is a differentiated one, chosen from the set $\{ \prod_{k=1}^{N} [(RR, CR, BF)]^{|k} \}(c, r)\, P,$ performed nondegenerate (the first cascade consists of one member) or degenerate (the first cascade consists of two or more members).

2. FPGB by claim 1 **characterized in that** its (RR, CR, De) FP is made from the series (RR, CR, De) (s, r) FP: (RR, CR, De)s FP - solid; (RR, CR, De)r FP - ring;

3. FPGB by claim 2, **characterized in that** its (RR, De) s FP is made with a central or dispersed ICL (ICL - drive coupling zone);

4. FPGB by claim 2 **characterized in that** its (RR, De)s FP with the central ICL is made with outer-directed blades - (RR, De) s ↑ FP, and is selected from the series (RR, De) s (C, $\in$) ↑ FP: (RR, De) sC ↑ FP - collinear; (RR, De) s $\in$ ↑ FP - noncollinear;

5. FPGB by claim 2 **characterized in that** its (RR, CR, De) r FP is executed selected from the series (RR, CR, De)r(C, $\in$, O) FP: (RR, CR, De) rC FP - collinear; (RR, CR, De) r $\in$ FP is non-collinear; (RR, CR, De) rO FP - orthogonal;

6. FPGB by claim 5 **characterized in that** its (RR, CR, De) rO FP is made by one-shoulder or two-shoulder blades;

7. FPGB by claim 1-6 **characterized in that** its (RR, De)s(C, $\in$) FP with dispersed ICL and (RR, CR, De)r(C, $\in$) FP are respectively chosen from the series (RR, De)s(C, $\in$) i FP with dispersed ICL and (RR, CR, De) (C, $\in$) i FP, where i = ↑, ↓, ↕: (RR, De)s(C, $\in$) ↑ FP with dispersed ICL and (RR, CR, De) (C, $\in$) ↑ FP - with outer-directed blades; RRs (C, $\in$) ↓ FP with dispersed ICL and (RR, CR, De) (C, $\in$) ↓ FP - with inner-directed blades; (RR, De)s(C, $\in$) ↕ FP with dispersed ICL and (RR, CR, De) (C, $\in$) ↕ FP - with bi-directional blades;

8. is missed

9. FPGB by claim 8 **characterized in that** its RR, De) s (C, $\in$) ↕ FP with dispersed ICL and (RR, CR, De) (C, $\in$) ↕ FP are fulfilled, respectively, in the form of (RR, De) s (C, $\in$) ↕ FP-OT with dispersed ICL and (RR, CR, De) r (C, $\in$) ↕ FP-OT - with optimized torques (with minimum torque);

10. FPGB by claim 9 **characterized in that** the ratio of the lengths of the inner $r_{M1}$ to the outer $r_{M2}$ component (the

ratio of the lengths of the inner-directed to the outer-directed blades) is given in the interval

$$0,5 \le \frac{r_{M1}}{r_{M2}} \le 0,8 \ ;$$

**11.** FPGB by claim 1 **characterized in that** its De FP is made with a constant configuration or with a variable configuration (the components change their orientation relative to each other);

**12.** FPGB by claim 11 **characterized in that** it is made cascaded and with the possibility of rotating the blades of its internal and external cascades: in one direction; in different directions; regulation of their directions independently of each other;

**13.** FPGB by claim 12 **characterized in that** it is made with the possibility of rotation of the blade parts of its internal and external cascades: with the same angular velocity; with different angular velocities; regulation of their angular velocities independently of each other;

**14.** FPGB by claim 1-13 **characterized in that** its RR (C, $\in$) $\updownarrow$ FP (RR (C, $\in$) $\updownarrow$ FP - FP type with bi-directional blades) is selected from the series: it is executed with a single and equal number of outer-and inner-directed parts of the blades; is made with disconnected and different number of outer- and inner-directed parts of blades;

**15.** FPGB by claim 1-14 **characterized in that** its DCL (Drive coupling loop) is made of selected from the series: rigid of the given form, the common base of the rotor block; central drive; at least one side drive; a flexible common base of the rotor assembly with one or more drive and a guide system selected from the series: a fixed rigid forming base of the stator block to support the flexible common base of the rotor block; angle-forming rollers to support the flexible common base of the rotor block;

**16.** FPGB by claim 15-6 **characterized in that** its curvilinear-rotational - CR (C, $\in$) FP, is made with CHM (CHM - characteristic line of motion), selected from the series: triangular shape with rounded corners; two-angled shape with rounded corners - in a form in which the two sides are made in the form of straight lines, and two end sides are made in the form of half circles; quadrangular shape with rounded corners; ellipsoid form, but are not limited to them;

**17.** FPGB by claim 1-16 **characterized in that** it is executed with the compensated twisting moment;

**18.** FPGB by claim 17 **characterized in that** it is performed by the b/c RB technology and with at least three interfaced SSDBs (SSDB subsystems of drive blocks) - with the main (bRB) and compensating (cRB) rotor blocks (for example, two-rotor) and with the possibility of mutual compensation of their torque transmitted to the stator block;

**19.** FPGB by claim 17 and 18 **characterized in that** its bRB is performed bladed, cRB is made bladed or energy-producing;

**20.** FPGB by claim 19 **characterized in that** its cRB is designed to provide power generation on the basis of direct drive;

**21.** FPGB by claim 19-20 **characterized in that** its two rotor blocks are driven by a common stator block;

**22.** FPGB by claim 19-21 **characterized in that** its stator block and at least one rotor block is provided with a torque value sensor transmitted from the rotor block to the stator block;

**23.** FPGB by claim 1-22 **characterized in that** the blades of its rotary FP are designed to be able to rotate uniformly along the azimuth angle of the arc DCL or the X-shaped relative to each other during rotation and the parking positions are concentrated in two sectors, in particular two opposite sectors;

**24.** FPGB by claim 1-23 **characterized in that** its blades FP are connected to the base of the rotor block through beams;

**25.** FPGB by claim 1-24 **characterized in that** its drive is made from an electric motor or a mechanical motor;

**26.** FPGB by claim 25 **characterized in that** it is made with the drive from mEM (mEM - multi-vector electric motor) with MVIC, where MVIC - multivector induction coupling;

**27.** FPGB by claim 25 and 26 **characterized in that** it is made with a direct drive from an electric motor;

**28.** FPGB by claim 25-27 **characterized in that** at least one of its SSDB (SSDB - subsystem of drive blocks) is performed sector;

**29.** FPGB by claim 28 **characterized in that** one of its SSDBs is executed full-interval ICS (ICS - the Induction coupling surface), the other with it the conjugated sector SSDB is executed with an arbitrary number of sector ICSs and each of the sector ICS occupies a non-zero arbitrary size;

**30.** FPGB by claim 28 **characterized in that** it is designed to ensure the constancy of the areas of surfaces located in a simultaneous mutual drive engagement, regardless of the position of the rotor block with respect to the stator block;

**31.** FPGB by claim 29 **characterized in that** it is made with RR FP - circular rotational FP and with the possibility of uniformity of azimuth angular distributions of the width and area of sector ICS of the rotor block;

**32.** FPGB by claim 31 **characterized in that** for a single-sector ICS stator block located along an arc with an azimuth angle $\theta_{BA\pi}$ = $\pi$ or with a three-sector ICS of stator block located along an arc with an azimuth angle $\theta_{BA\pi3} = \dfrac{\pi}{3}$, each of the sectors, where three sectors of the stator block are located at intervals with an azimuth angle $\theta_{BA\pi3} = \dfrac{\pi}{3}$, with an even number of sector ICSs of rotor block, in the creation of a simultaneous mutual drive coupling involves half of all sector ICSs of the rotor block;

**33.** FPGB by claim 31 **characterized in that** at an arbitrary number of sector ICSs of rotor block $N_{Pj}$, in the case of a two-sector ICS of stator block, each of which is located in an arc with an azimuth angle $\theta_{BAj}$ equal to $\theta_{BAj} = \dfrac{2\pi}{N_{Pj}}$ and located on the opposite sides of the ICL, two sector ICSs of the rotor block participate in creating the simultaneous mutual drive coupling;

**34.** FPGB by claim 31 **characterized in that** with an arbitrary $N_{Pj}$ number of sector ICSs of rotor block, with a single-sector ICS of stator block located along an arc with an azimuth angle $\theta_{BAj}$ equal to $\theta_{BAj} = \dfrac{2\pi}{N_{Pj}}$, one sector ICS of the rotor block participates in creating a simultaneous mutual drive coupling;

**35.** FPGB by claim 31 **characterized in that** with an arbitrary $N_{Pj}$ number of sector ICS rotor blocks and with two sector ICS stator blocks, each of which is located along an arc with an azimuth angle of equal to $\theta_{BAj} = \dfrac{\pi}{N_{Pj}}$, one sector ICS of the rotor block participates in creating a simultaneous mutual drive coupling, and: with an odd number of sector ICSs of the rotor block, the sector ICSs of the stator block are located on the opposite sides of the ICL; with an even number of sector ICSs of the rotor block, the sector ICSs of the stator block are arranged such that on one side the azimuth angular interval between them is $\beta_{Uo2}$ = $\pi$;

**36.** FPGB by claim 1-6 **characterized in that** at an even $N_{Pj}$ number of sector ICS rotor blocks with three-sector ICS stator blocks, each of which is designed as an arc with an azimuth angle $\theta_{BAj3} = \dfrac{2\pi}{3N_{Pj}}$ , and under the conditions that the two sector ICSs of the stator block are located at azimuth angular distance equal to

$$\theta_{BAj3} = \frac{2\pi}{3N_{Pj}}$$

and the third sector ICS of the stator block is located on the opposite side, in the creation of a simultaneous mutual drive coupling one sector ICS of the rotor block participates.

**37.** 41 are missed

**42.** SMA (SMA - self-moving apparatus), включающий тяговую систему средств обеспечения

перемещения и корпус, отличающийся тем, что он включает, по меньшей мере, одну

следующих особенностей:

SMA (SMA - self-moving apparatus), which includes the traction system of the means of movement and the hull **characterized in that** it includes at least one of the following features:

- at least one Z-CTV subsystem containing a set of one or a group of motors located perpendicular to the $\lambda$ -plane SMA and TPS (TPS-thrust producing surface), which are designed to allow a vertical or vertical-horizontal thrust with one side of the motor and the vertical-horizontal thrust on the other side of the motor;
- includes, one of the types of FPGB, selected from the series:

(A) CR (C, $\in$) FP - curvilinear-rotational, selected from the series: CR (C, $\in$) $\uparrow$ FP - with outer-directed blades; CR (C, $\in$) $\downarrow$ FP-with inner-directed blades; CR (C, $\in$) $\updownarrow$ FP-with bi-directional blades;

(B) BF (C, $\in$) FP - reciprocating (rectilinear or curvilinear motion of reciprocating form) selected from the series: BF (C, $\in$) $\uparrow$ FP - with outer-directed blades; BF (C, $\in$) $\downarrow$ FP - with inner-directed blades; BF (C, $\in$) $\updownarrow$ FP-with bi-directional blades.

(C) circular rotational (RR (C, $\in$) FP with dispersed ICL (ICL - drive coupling zone) made with inner-directed blades RR (C, $\in$) $\downarrow$ FP with dispersed ICL or with bi-directional blades RR (C, $\in$) $\updownarrow$ FP) with dispersed ICL;

(D) De FP is a differentiated one, chosen from the set $\{ \prod\limits_{k=1}^{N} [(RR, CR, BF)]^{|k} \}(s, r)$ FP, performed non-degenerate (the first cascade consists of one constituent member) or degenerate (the first cascade consists of two or more constituent members).

**43.** SMA by claim 42 **characterized in that** its shape of its hull is chosen from a number of forms: drop-shaped; longitudinally half-deciduous; pan-shaped; disk-shaped; two-angled with rounded corners; passenger car or other form, including streamlined;

**44.** SMA by claim 42 and 43 **characterized in that** it is executed chosen from a number: single-hull; multi-hull, which can be: longitudinally multi-hull; cross multi-hull; transversely-longitudinally multi-hull;

**45.** SMA by claim 44 **characterized in that** its motor is made in the form of a channel-oblique FP and the plane of rotation of FP with respect to the axis of the channel of FP is located at an angle y6, the value of which is limited within $\pi/10 \leq \gamma6 \leq \pi/2$;

**46.** SMA by claim 42-45 **characterized in that** по любому its wing is made with the possibility of changing the area, and selected from a number of folding foW: frame-curtain; accordion-shaped; telescoping folding; button-folding; fan-folding;

**47.** SMA by claim 46 **characterized in that** its folding wing foW is made with a rowing end;

**48.** SMA by claim 47 **characterized in that** its mushroom end is made of the chosen one: one-piece; with a flap;

**49.** SMA by claim 46-48 **characterized in that** its folding foW wings are made with a rectangular-triangular integral or ramp with an acute angle $\gamma 3$, limited within $0 \leq \gamma 3 \leq \pi/3$, to fix foW to the SMA body at a certain angle;

**50.** SMA by claim 46-49 **characterized in that** its folding foW wings are made with a single end bent by a top or double ends bent in different directions - top and bottom with respect to the $\lambda$-plane of SMA;

**51.** SMA by claim 42-50 **characterized in that** its FP motor is made of a series selected from: two-channel FP, where each channel includes FP; one-channel FP - one or more motors in one channel;

**52.** SMA by claim 42-51 **characterized in that** the blades of its FP with a bladed base are connected through the bearing beams, the length of which tends to the difference between the averaged half-length and the averaged half-width of the SMA hull;

**53.** 54 are missed.

**55.** SMA by claim 42 **characterized in that** in its Z-CTV subsystem, the rear of the front component of the TPS covers the front of the motor channel from below, and the front of the rear component of the TPS covers the rear of the motor channel from above;

**56.** SMA by claim 55 **characterized in that** its Z-CTV-subsystem is made with a constant configuration or with the possibility of changing the mutual configuration of its components;

**57.** SMA by claim 56 **characterized in that** its Z-CTV subsystem, with a variable mutual configuration of its components, is designed to allow the direction of the jet to change from a tangent to the $\lambda$-plane of SMA to the perpendicular to the $\lambda$-plane of SMA;

**58.** SMA by any of claim 56 and 57 **characterized in that** it includes one or more Z-CTV subsystems, executed: above the hull; symmetrically on the two sides of the hull; above the hull and symmetrically on the two sides of the hull;

**59.** SMA by claim 58 **characterized in that** its Z-CTV subsystems are located symmetrically on the two lateral sides of the hull in the adjacent (adjacent to the hull) areas or at some distance from the hull;

**60.** SMA by any of claim 58 and 59 **characterized in that** the shape of the motor channel of the Z-CTV subsystem is selected from the series: a straight axis; curvilinear, including arcuate axis;

**61.** SMA by claim 60 **characterized in that** the shape of at least one of the output and inlet holes of the motor channel is formed by a one-sided or two-lateral groove shaped, with the open portion of the inlet groove (holes on the front of the SMA) of the motor channel pointing upward to the SMA, the open portion of the outlet opening from the rear of the SMA) of the motor channel is pointing down the SMA;

**62.** SMA by claim 61 **characterized in that** its Z-CTV subsystem located symmetrically on the two sides of the casing, the lateral trough of the one-sided trough-shaped inlet and / or outlet of the motor channel is located on the far side of the SMA hull;

**63.** SMA by any of claim 55-62 **characterized in that** the shape of the hull constituting the TPS, at the places of their contact with the motor channel are made with the possibility of minimizing the drag;

**64.** SMA by claim 63 **characterized in that** the shape of the hull and components of the TPS, at the intervals of their intersection with the motor channel, repeat the shape of the motor channel, which repeats the external shape of the motor;

**65.** SMA by any of claim 55-64 **characterized in that** it is made two-wing and at least one of the front wing and rear wing is made by a traction / protrusion to create a TPS together with a wing, or TPS is created by wings;

**66.** SMA by claim 65 **characterized in that** it is made in the form of a hybrid of a helicopter airplane and additionally includes vertical thrusters;

**67.** SMA by claim 66 it includes at least two vertical thrusters selected from the series: located symmetrically on the two sides of the hull, front and at the level of the front lower wing and/or as continuation along the length and at the level of its short front lower wing; located symmetrically on the two sides of the hull, as continuation along the length and at the level of its short rear wing; located at the level of the rear upper wing and as a continuation of the tail of the SMA;

**68.** SMA by any of claim 55-62 **characterized in that** it is performed a single-wing, and the inlet of the motor channel is located above the wing, the outlet of the motor channel is located under the wing;

**69.** SMA by claim 68 **characterized in that** it is made in the form of a hybrid helicopter-airplane and additionally includes vertical thrusters;

**70.** SMA by claim 69 **characterized in that** it includes, as far as possible, one vertical thruster selected from the series: one large-diameter motor, containing in the central annular part the whole hull or its part; two motors located symmetrically on two sides of the hull; two motors are located symmetrically on two sides of the hull in the front of the wing, and the third motor located at the wing level at its rear part and as a continuation of the tail part of the SMA;

**71.** SMA by any of claim 65-70**characterized in that** the shape of its wing is made of a selected from the series: obtuse; wedge shaped; truncated-wedge-shaped; rectangular; truncated-deltoid, but not limited to these shapes;

**72.** SMA by any of claim 65-71 **characterized in that** the shape of its wing, in a one-winged type, is flat or curved, at least in one of two mutually perpendicular directions;

**73.** SMA by claim 72 **characterized in that** the shape of its wing, executed with curvature;

**74.** SMA by any of claim 42-58 **characterized in that** it is made in the form of a flying disk (saucer) or other shape of a flying object around which one or more motors are located, **characterized in that** its motors are made in the form of a large diameter FP selected from the series:

(A) CR (C, $\in$) FP - curvilinear-rotational, selected from the series: CR (C, $\in$) $\uparrow$ FP - with outer-directed blades; CR (C, $\in$) $\downarrow$ FP - with inner-directed blades; CR (C, $\in$) $\updownarrow$ FP) - with bi-directional blades;

(B) circular rotational RR (C, $\in$) FP made with inner-directed blades RR (C, $\in$) $\downarrow$ FP or with bi-directional blades RR (C, $\in$) $\updownarrow$ FP;

(D) De FP is a differentiated one, chosen from the set $\{ \prod_{k=1}^{N} [(RR, CR, BF)]^{|_k} \}(c, r)$ FP, performed nondegenerate (the first cascade consists of one constituent member) or degenerate (the first cascade consists of two or more constituting members);

**75.** SMA by claim 74 **characterized in that** it additionally includes one or more horizontal thrust motors;

**76.** 79. are missed.

**80.** SMA by any of claim 42-58 **characterized in that** it is made in the form of a helicopter with provision of possibility of vertical lift and flight, including the significant size vertical thruster FP, separately located above the hull and connected to the hull through a connecting system, **characterized in that** it is made with FP type selected from the series:

(A) CR (C, $\in$) FP - curvilinear-rotational, selected from the series: CR (C, $\in$) $\uparrow$ FP - with outer-directed blades; CR (C, $\in$) $\downarrow$ FP - with inner-directed blades; CR (C, $\in$) $\updownarrow$ FP - with bi-directional blades;

(B) circular-rotational RR (C, $\in$) FP made with inner-directed blades RR (C, $\in$) $\downarrow$ FP or with bi-directional blades RR (C, $\in$) $\updownarrow$ FP;

(D) De FP is a differentiated one, chosen from the set $\{ \prod_{k=1}^{N} [(RR, CR, BF)]^{|_k} \}(c, r)$ FP, performed nondegenerate (the first cascade consists of one constituent member) or degenerate (the first cascade consists of two or more constituent members).

**81.** SMA by claim 80 **characterized in that** its vertical thruster is made of a series: with a ring full-interval ICS (ICS - the Induction coupling surface), a stator and a rotor block; with a ring full-interval ICS of one of the stator and rotor blocks with sector ICS of another; with sector ICS stator and rotor blocks;

**82.** SMA by any of claim 80 and 82 **characterized in that** it additionally includes a folding wing foW;

**83.** SMA by any of claim 80-82 **characterized in that** it additionally includes: one or more horizontal thrust motors, for example, in the form of a pushing FA in the rear of the SMA/ h; vertical and/or horizontal direction control system during flight;

**84.** SMA by any of claim 80-83 **characterized in that** its vertical thruster is designed to provide the possibility of compact folding when not in use - during flight, as an aircraft horizontally and/or during parking;

**85.** SMA by any of claim 42-58 **characterized in that** it is made in the form of a compact helicopter or a compact flying hybrid with the ability to access each of the components of the SMA, selected from the series: salon; rear under-capote part, the front under- capote part, and **characterized in that** it includes at least one feature selected from the series:

(A) comprises a front under-capote motor system comprising at least one vertical thruster;
(B) comprises a rear under-capote motor system including at least one vertical thruster;
(C) comprises a over-salon flat-folded motor system including at least one vertical thruster;
(D) contains a flat-folded side support system;

**86.** SMA by claim 85 **characterized in that** it includes at least one folded fragment on the rear and/or upper side of the hull, configured to control the horizontal direction of movement of the SMA during its flight;

**87.** SMA by any of claim 85 and 86 **characterized in that** it further includes at least one horizontal draft motor selected from a series: pushing motor located in behind of the hull in which jets of the current medium enter through two lateral channels and exit through two rear channels; the first stage of De FP, executed with a variable configuration; FP set over the SMA salon, made with providing possibility of rotation perpendicular to the $\lambda$-plane by an angle $\gamma6$ within $0 \leq \gamma6 \leq \pi / 2$ around axes going through points of its attachment;

**88.** SMA by any of claim 85-87 **characterized in that** it is made in the form of an all-terrain vehicle, and for movement along the surface chosen from the series: liquid (for example water), solid precipitation (e.g. snow), highway, swamp; appropriate additional vehicles are installed, for example selected from the range: wheels, tracks, rowing FP, skis;

**89.** SMA by any of claim 85-88 **characterized in that** its blades are made sectorally and/or folded in a parking lot or when moving;

**90.** SMA by any of claim 85-89 **characterized in that** its motor is made of a selected type of FP, with the possibility of fulfilling a condition selected from the series: providing vertical thrust; providing horizontal thrust; providing vertical-horizontal thrust;

**91.** SMA by claim 90 **characterized in that** its FP is made in the form of De FP with a variable configuration, and the first stage $P|_1$ which is designed to provide the possibility of creating a horizontal thrust during the flight of the SMA;

**92.** SMA by any of claim 85-91 **characterized in that** its flat-folded side support system is located above the upper level of the side and/or front viewing window, and includes:

(A) lateral motors, in particular in the form of FP, each of which is connected to the SMA salon via beams, and when not in operation, they fold and tightly press against the SMA hull;
and / or
(B) two groups of sectors designed to be able to be unfold symmetrically from both sides of the salon, while the width and length of each sector tends, respectively, to the width and length of the SMA salon, and in each group the sectors are connected to each other so that they can be folded, partially or completely, above the salon, each sector being selected from a series: a connecting frame that does not prevent the flow of jets of the current medium through it; frame with motor; sector wing;

**93.** SMA by claim 92 **characterized in that** its flat-folded side support system is designed to be able to compactly fold completely or partially over the SMA salon;

**94.** SMA by any of claim 85-91 **characterized in that** its front and rear under-capote motor systems are designed to provide at least one of the conditions selected from the series: located below the lower level of the rear and front viewing window; projection-screen observation of the environment,
and includes:

(A) at least one of the series: front under-capote motor; rear under-capote motor, which are designed to provide, respectively, anterior-frontal or antero-oblique unfolding on the beam, and a rear-frontal or rear-oblique unfolding on the beam,
and / or
(B) two groups of sectors designed to be able to be unfold symmetrically on both sides of under-capote part of the hull, while the width and length of each of the sectors tends, correspondingly to the width and length of the under-capote part of the SMA hull, and in each group the sectors are connected to each other with providing possibility of folding, partially or completely, in the under-capote part of the hull, while each sector being selected from a series: a connecting frame that does not interfere with the passage of jets of the current medium through it; frame with motor; sector wing;

**95.** SMA by claim 94 **characterized in that** at least one of the motors of the vertical thrust of the front and rear motor of the under-capote motor system is designed to telescopically extend it from the front edge of the SMA salon, to a distance R - greater than the length of its blades, to unfold the FP and rotate the FP blades;

**96.** SMA by any of claim 94-95 **characterized in that** it additionally includes a flat-folded side support system;

**97.** SMA by any of claim 85-91 **characterized in that** its over-salon folding system is located above the upper level of the front and / or rear viewing window, and includes at least one motor, in particular an FP, performed above the salon and with the possibility of vertical or vertical-horizontal thrust;

**98.** SMA by any of claim 97 **characterized in that** its overhead flat folding system is made of a series of FPs: CRrS ↑ FP, whose curvilinear form tends to repeat the shape of the SMA/a hull; RRrC ↑ FP, whose blades are connected to the ring motor through beams, the length of which tends to the difference of the half-length and half-width of the SMA/a hull;

**99.** SMA by any of claim 97 and 98 **characterized in that** its over-salon flat-folded system is designed with the possibility of compact folding over the SMA salon;

**100.** SMA by any of claim 97 and 98 **characterized in that** it additionally includes a flat-folded side support system

**101.** 118 are missed.

EP 3 272 648 A2

FIG. 1

FIG. 2

FIG. 3

FIG. 4

FIG. 5 a

FIG. 5b

FIG. 6

FIG. 7

EP 3 272 648 A2

RRCc↑

RRC↑₂

FtD1

**FIG. 8**

RRCc↑

RRϹ↑₂

α_B

Pj

FtD2

**FIG. 9**

29

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

FIG. 21

FIG. 22

FIG. 23

FIG. 24

FIG. 25

**FIG. 26a**

**FIG. 26b**

**FIG. 27**

**FIG. 28**

**FIG. 29**

**FIG. 30**

**FIG. 31**

**FIG. 32**

**FIG. 33**

**FIG. 34**

**FIG. 35**

**FIG. 36**

**FIG. 37**

sRBj

$\theta_{BA\pi}$

sSB

**FIG. 38**

sRBj

$\theta_{BA\pi3}$

sSBj

**FIG. 39**

**FIG. 40**

**FIG. 41**

**FIG. 42**

**FIG. 43**

FIG. 44

FIG. 45

FIG. 46

FIG. 47

FIG. 48

FIG. 49

FIG. 50

FIG. 51

FIG. 52

FIG. 53

FIG. 54

$\beta_{Uo2}$

FIG. 55

**FIG. 56**

**FIG. 57**

**FIG. 58**

**FIG. 59**

**FIG. 60**

**FIG. 61**

FIG. 62

FIG. 63

FIG. 64

FIG. 65

FIG. 66

FIG. 67

FIG. 68

FIG. 69

Sto

FIG. 70

FIG. 71

$P|_2 2$

$P|_1 1.1$

$P|_1 1.2$

St2

**FIG. 72a**

$P|_2 2$

$P|_1 1.2$

$P|_1 1.1$

$P|_1 1.3$

St2

**FIG. 72b**

$P|_2$

$P|_1$ $\beta 1$

St2 St2

$P|_2$

**FIG. 74a**

St2

$P|_1$

**FIG. 73**

$P|_1$

$\beta 2$ $P|_2$

**FIG. 74b**

P1

P1

1

**FIG. 75a** **FIG. 75b** **FIG. 76**

y

z

**FIG. 77**

y

z

**FIG. 78**

FIG. 79

FIG. 80

FIG. 81

FIG. 82

FIG. 83

FIG. 84a

FIG. 84b

FIG. 84c

FIG. 85

FIG. 86

FIG. 87

FIG. 88

FIG. 89

FIG. 90

FIG. 91

**FIG. 92**

**FIG. 93**

**FIG. 94**

**FIG. 95**

FIG. 96a

FIG. 96b

FIG. 97

FIG. 98

FIG. 99

$B_1$

SMA1

C

sW

M

FIG. 100

$B_2$

cW1

C

M

sW

FIG. 101

cW2

C

M

sW

FIG. 102

C

cW2

M

sW

FIG. 103

$A_1$

cW2

C

M

sW

$A_2$

FIG. 104

cW2

M

$A_1$

C

sW

$A_2$

FIG. 105

**FIG. 106**

**FIG. 107**

**FIG. 108**

**FIG. 109**

**FIG. 110**

FIG. 111

FIG. 112

FIG. 113

FIG. 114

FIG. 115

FIG. 116

FIG. 117

FIG. 118

FIG. 119

FIG. 120

FIG. 121

FIG. 122

FIG. 123

**FIG. 124a**

**FIG. 124b**

**FIG. 125**

**FIG. 126a**

**FIG. 126b**

FIG. 127

FIG. 128

FIG. 129

FIG. 130

FIG. 131

FIG. 132

FIG. 133

FIG. 134

FIG. 135

FIG. 136

FIG. 137

**REFERENCES CITED IN THE DESCRIPTION**

**Patent documents cited in the description**

- US 3774865 A
- US 20130306802 A
- US 6837457 B2
- US 872726 B2
- US 8408488 B2